(19) Europäisches Patentamt
European Patent Office
Office européen des brevets

(11) EP 1 130 062 B1

# (12) EUROPÄISCHE PATENTSCHRIFT

(45) Veröffentlichungstag und Bekanntmachung des Hinweises auf die Patenterteilung:
**22.03.2006 Patentblatt 2006/12**

(51) Int Cl.:
***C09B 5/62*** *(2006.01)* ***C09B 67/04*** *(2006.01)*

(21) Anmeldenummer: **01101319.0**

(22) Anmeldetag: **20.01.2001**

(54) **Verfahren zur Herstellung von Perylen-3,4,9,10-tetracarbonsäurediimid in transparenter Pigmentform**

Process for the preparation of perylene-3,4,9,10-tetracarboxylic acid diimid in transparent pigment form

Procédé pour la préparation de diimides d'acide pérylène -3,4,9,10-tétracarboxylique dans une forme pigmentaire transparente

(84) Benannte Vertragsstaaten:
**CH DE ES FR GB IT LI**

(30) Priorität: **05.02.2000 DE 10005186**

(43) Veröffentlichungstag der Anmeldung:
**05.09.2001 Patentblatt 2001/36**

(73) Patentinhaber: **Clariant Produkte (Deutschland) GmbH**
**65929 Frankfurt am Main (DE)**

(72) Erfinder:
- **Weber, Joachim, Dr.**
**65929 Frankfurt am Main (DE)**
- **Wilker, Gerhard**
**64546 Mörfelden-Walldorf (DE)**
- **Urban, Manfred**
**65205 Wiesbaden (DE)**
- **Böhmer, Martin**
**61267 Neu-Anspach (DE)**
- **Dietz, Erwin, Dr.**
**61462 Königstein (DE)**

(56) Entgegenhaltungen:

| | |
|---|---|
| **EP-A- 0 039 912** | **EP-A- 0 366 062** |
| **EP-A- 0 662 497** | **EP-A- 0 678 559** |
| **EP-A- 0 753 544** | **EP-A- 0 864 613** |
| **EP-A- 0 937 724** | **EP-A- 0 979 846** |
| **DE-A- 1 619 531** | **DE-A- 4 007 728** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 130 062 B1

## Beschreibung

Gegenstand der vorliegenden Erfindung ist ein besonders umweltfreundliches und wirtschaftliches Verfahren zur Herstellung von transparenten Perylen-3,4,9,10-tetracarbonsäurediimid-Pigmenten gemäß Formel (I), worin

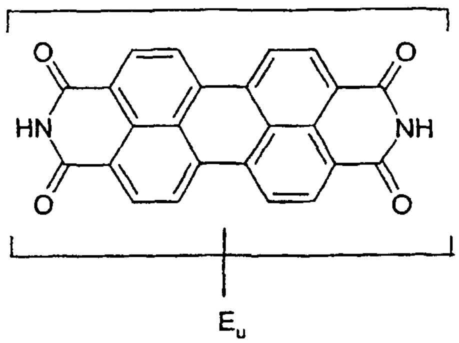

(I)

u eine Zahl von 0 bis 8 ist, und wenn u > 0 ist,
E ein Chlor- oder Bromatom und, sofern u > 1 ist, ggf. eine Kombination davon

darstellt.

Bei der Pigmentierung von Automobillacken, insbesondere den Metalliclacken, werden Pigmente benötigt, die bei hoher Transparenz und reinem Farbton farbstarke und hochglänzende Lackierungen ergeben. Die Farbkonzentrate und die Lacke müssen niedrigviskos sein und dürfen keine Strukturviskosität zeigen. Außerdem werden sehr gute Echtheiten, insbesondere gute Wetterechtheit, verlangt.

Organische Pigmente fallen je nach Syntheseweg bei ihrer Herstellung in grobkristalliner oder feinteiliger Form an. Grobkristallin anfallende Rohpigmente müssen vor ihrer Anwendung feinverteilt werden. Solche Feinverteilungsprozesse sind beispielsweise Roll- oder Schwingmahlungen, die naß oder trocken, mit oder ohne Mahlhilfsmittel wie beispielsweise Salz, ausgeführt werden, Knetungen, Umküpungen, Umfällungen aus beispielsweise Schwefelsäure oder Polyphosphorsäure (acid pasting) und Suspendieren in beispielsweise Schwefelsäure oder Polyphosphorsäure (acid swelling).

Sowohl die aus einer Synthese als auch die aus einer bislang bekannten Feinverteilung feinteilig anfallenden Präpigmente können im Falle des Perylen-3,4,9,10-tetracarbonsäurediimids (nachstehend Perylimid genannt) nicht direkt als Pigmente eingesetzt werden, da sie bei der Aufarbeitung und vor allem bei der Trocknung sehr stark zur Bildung von Aggregaten und Agglomeraten neigen, was zu schlechter Dispergierbarkeit führt, die beispielsweise einen Verlust an Farbstärke bewirkt. Außerdem zeigen Perylimidpigmente eine sehr starke Neigung zur Flokkulation in Lacken. Beides führt zu anwendungstechnischen Eigenschaften, die den heutigen Ansprüchen nicht mehr genügen.

Perylimid wird als organisches Marron- bis Rotviolettpigment (C.I. Pigment Violet 29, C.I.Nr. 71129) seit langem verwendet. Auch die Eignung der halogenierten Derivate als Pigmente ist bekannt. Das Rohpigment wird entweder durch Reaktion von 1,8-Naphthalindicarbonsäureimid in Alkalihydroxidschmelzen und anschließender Oxidation der gebildeten Leukoform, wie beispielsweise in EP-A-0 123 256 beschrieben, oder durch Kondensation von Perylen-3,4,9,10-tetracarbonsäure oder ihrer Anhydride oder Carbonsäuresalze (im folgenden Persäure genannt) mit Ammoniak hergestellt, wie beispielsweise in DE-A-386 057 beschrieben. Die Herstellung der halogenierten Derivate wird beispielsweise in der EP-A-0 260 648 beschrieben. Zur Überführung der so erhaltenen Perylimide in eine coloristisch brauchbare Pigmentform werden folgende Verfahren beschrieben:

Die DE-A-16 19 531 beschreibt die Überführung von rohem Perylimid in ein Pigment durch Mahlung in inerten organischen Lösemitteln und Trocknung aus dem Lösemittel. Das Verfahren ist kostspielig, da es einen hohen apparativen Aufwand benötigt, außerdem muß das Lösemittel regeneriert werden.

EP-A-0 753 544 beschreibt ein Verfahren, in dem grobkristalline Rohpigmente oder schwer dispergierbare Präpigmente oder Pigmente mit dem gewünschten Trägermaterial, das Bestandteil eines flockungsstabilen, wässrigen, wässrig-organischen oder organischen Mediums ist, in diesem Medium auf einer Rührwerkskugelmühle mit hoher Energiedichte und kleinen, nichtmetallischen Mahlkörpern bis zum Erreichen eines minimalen Feinverteilungsgrades der resultierenden Pigmentteilchen nassvermahlen werden.

EP-A-0 979 846 beschreibt ein Verfahren zur Herstellung von N,N-Dimethylperylen-3,4,9,10-tetracarbonsäurediimid in transparenter Pigmentform unter Anwendung der Reaktion von Perylen-3,4,9,10-tetracarbonsäuredianhydrid mit einer bestimmten Menge Monomethylamin und Wasser, einer Nassmahlung auf einer Rührwerkskugelmühle und Zugabe eines Dispergators.

In EP-A-0 864 613 werden Pigmentzubereitungen aus einem organischen Pigment und einem aminhaltigen Perylendispergator offenbart.

EP-A-0 662 497 beschreibt die Verwendung eines Fettsäuretaurids zur Herstellung leicht dispergierbarer polycyclischer Pigmente aus der Klasse der Chinacridone und Dioxazine.

Die DE-A-20 43 820 beschreibt ein Naßmahlverfahren in wäßrig alkalischem Medium. Die unter den angegeben Bedingungen erhältlichen Pigmente genügen jedoch nicht mehr den heutigen Anforderungen.

Die DE-A-23 16 536 beschreibt ein zweistufiges Verfahren zur Herstellung von Perylimidpigmenten durch Trockenmahlung des Rohpigments und anschließendem Desagglomerations- und Rekristallisationsschritt durch entweder Finish in Gegenwart von Aminen oder Amiden oder Suspendieren des Mahlguts in Schwefelsäure (acid swelling). Die verwendeten Amine oder Amide können zu Unverträglichkeiten in manchen Anwendungen führen, so daß die Pigmente nicht universell einsetzbar sind.

Die DE-A-28 51 752 beschreibt ein mehrstufiges Verfahren zur Konditionierung von organischen Pigmenten, unter anderem wird auch Perylimid als Beispiel genannt: Es wird eine Trockenmahlung in Gegenwart von geringen Mengen Säure durchgeführt, in einem zweiten Schritt schließt sich eine Rekristallisation der während der Mahlung gebildeten Agglomerate durch einen Lösemittelfinish an. Die Trockenmahlung in Gegenwart von Säure stellt extreme Anforderungen an das Material der verwendeten Mahlaggregate, außerdem ist eine Belastung der Umwelt und des Bedienpersonals durch Staub in der Praxis kaum auszuschließen.

Die EP-A-0 039 912 offenbart ein Verfahren zur Herstellung von Perylimiden sowie davon abgeleitete Halogenierungsprodukte in Pigmentform, indem das Rohpigment über die Stufe des Sulfats gereinigt und feinverteilt wird, anschließend eine Trockenmahlung zur Desagglomeration und dann gegebenenfalls ein Lösemittelfinish durchgeführt wird. Es handelt sich um ein mehrstufiges Verfahren, bei dem große Mengen Schwefelsäure anfallen und entsorgt werden müssen.

Die EP-A-0 366 062 offenbart ein Verfahren zur Herstellung halogenierter Perylimide und Mischkristalle von halogenierten Perylimiden mit hoher Deckkraft.

Nach DE 40 07 728 werden feinverteilte Perylimidpigmente einer Konditionierung in Gegenwart von organischen Lösemitteln unterworfen. Es handelt sich um ein zweistufiges Verfahren. Die bevorzugte Ausführungsform beschreibt die Verwendung von Carbonsäureestern, die nach dem Finish verseift und ins Abwasser abgegeben werden.

Die EP-A-0 678 559 beschreibt ein zweistufiges Verfahren zur Feinverteilung von Rohpigmenten. Zunächst wird eine Trockenmahlung durchgeführt, anschließend eine Naßmahlung. Letztere wird zur Dispergierung des agglomerierten Mahlguts benötigt. Die zweistufige Verfahrensweise führt zu erhöhten Kosten und zu langen Produktionscyclen, die Trockenmahlung ist mit den beschriebenen Nachteilen behaftet.

Es bestand das Bedürfnis, transparente Perylimid-Pigmente in einfacher, kostengünstiger und ökologisch einwandfreier Weise herzustellen.

Es wurde gefunden, daß man transparente Perylimid-Pigmente gemäß Formel (I) mit günstigen coloristischen und rheologischen Eigenschaften in einfacher und ökologisch einwandfreier Weise aus Perylimid-Rohpigmenten durch eine spezielle Perlmahlung mit hoher Energiedichte herstellen kann.

Gegenstand der vorliegenden Erfindung ist ein Verfahren zur Herstellung transparenter Perylimid-Pigment der Formel (I)

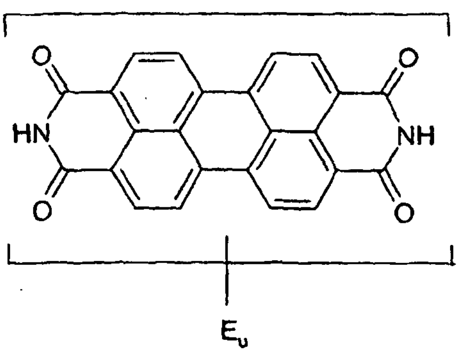

(I)

worin

u eine Zahl von 0 bis 8 ist, und wenn u > 0 ist,

E ein Chlor- oder Bromatom und, sofern u > 1 ist, ggf. eine Kombination davon

darstellt, dadurch gekennzeichnet, dass man ein Perylimid-Rohpigment in einem flüssigen Medium auf einer Rührwerkskugelmühle, die mit einer Leistungsdichte von mehr als 1,0 kW pro Liter Mahlraum und einer Rührwerksumfangsgeschwindigkeit von mehr als 12 m/s betrieben wird, unter der Einwirkung von Mahlkörpern vom Durchmesser gleich oder kleiner als 0,9 mm naßvermahlt und das erhaltene Pigment isoliert, wobei das flüssige Medium Wasser, $C_1$-$C_8$-Alkanole, cyclische Alkanole, $C_1$-$C_5$-Dialkylketone oder eine Mischung dieser Lösungsmittel mit Wasser ist.

Dabei können die Perylimid-Rohpigmente sowohl über den Weg der Reaktion von 1,8-Naphthalindicarbonsäureimid in Alkalihydroxidschmelzen und anschließender Oxidation der Leukoform als auch durch Kondensation von Persäure, wie vorstehend definiert, mit Ammoniak hergestellt worden sein.

Die aus der Synthese erhältlichen grobkristallinen Perylimid-Rohpigmente oder feinkristallinen Perylimid-Präpigmente können als Pulver oder vorteilhafterweise mit oder ohne Zwischenisolierung als Suspension oder in Form eines bei der Synthese anfallenden feuchten Presskuchens ohne weitere Trocknung der Naßmahlung zugeführt werden. Es ist auch möglich, die Perylimid-Rohpigmente zu reinigen, z.B. durch eine Umkristalüsation aus oder durch Ausrühren mit beispielsweise Schwefelsäure.

Die erfindungsgemäße Herstellung transparenter Perylimid-Pigmente gelingt überraschenderweise ohne eine vorherige Trockenmahlung. Für die Durchführung der erfindungsgemäßen Naßmahlung sind z.B. Rührwerkskugelmühlen geeignet, die zum diskontinuierlichen und kontinuierlichen Arbeitsablauf ausgelegt sind, mit zylinderförmigem oder hohlzylinderförmigem Mahlraum in horizontaler oder vertikaler Bauweise, und die mit einer spezifischen Leistungsdichte von über 1,0 kW pro Liter Mahlraum betrieben werden können, wobei deren Rührwerksumfangsgeschwindigkeit über 12 m/s beträgt. Durch die bauliche Ausführung wird sichergestellt, dass eine ausreichende Mahleriergie auf das Mahlgut übertragen wird. Dafür geeignete Mühlen sind beispielsweise in der DE-PS 3 716 587 beschrieben. Ist die Mahlintensität der Mühle zu gering, so werden die guten, erfindungsgemäßen Eigenschaften, insbesondere die hohe Transparenz und Farbstärke und hervorragende Coloristik der Pigmente nicht erreicht. Die pro Zeiteinheit vom Rührwerk abgegebene Energie wird als Zerkleinerungsarbeit und als Reibungsenergie in Form von Wärme auf das Mahlgut übertragen. Zur problemlosen Abführung dieser großen Wärmemenge muß durch konstruktive Vorkehrungen das Verhältnis von Mahlraum zu Mahlraumoberfläche (Kühlfläche) möglichst klein gehalten werden. Bei hohen Durchsätzen wird im Kreislauf gemahlen, und die Wärme wird überwiegend über das Mahlgut nach außen abgeführt. Als Mahlkörper dienen Kugeln aus Zirkonoxid, Zirkonmischoxid, Aluminiumoxid oder Quarz vom Durchmesser gleich oder kleiner als 0,9 mm; zweckmäßig werden solche mit einem Durchmesser von 0,2 bis 0,9 mm, vorzugsweise 0,3 bis 0,5 mm, verwendet.

Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so daß die Trennvorrichtungen von den Mahlkörpern praktisch nicht berührt werden, wodurch man Verstopfungen derselben weitgehend verhindern kann. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Die Mahlung kann in einem wäßrigen, wäßrig-organischen oder organischen Medium durchgeführt werden. Vorzugsweise wird die Mahlung ohne Zusatz von Lösemitteln im wäßrig-alkalischen oder neutralen pH-Bereich durchgeführt. Die Pigmentkonzentration im Mahlgut ist abhängig von der Rheologie der Suspension.

Sie sollte bei oder unter 30 Gew.-% liegen, im allgemeinen 5 bis 25 Gew.-% betragen, vorzugsweise zwischen 7,5 und 20 Gew.-% sein.

Die Mahldauer ist abhängig von den Feinheitsanforderungen für das jeweilige Anwendungsgebiet. Deshalb liegt die Verweilzeit des Mahlguts in der Rührwerkskugelmühle je nach geforderter Feinheit im allgemeinen zwischen 5 und 60 Minuten. Sie beläuft sich normalerweise auf eine Dauer von 10 bis 45 Minuten, vorzugsweise 15 bis 30 Minuten.

Die Mahlung wird vorteilhaft bei Temperaturen im Bereich von 0 bis 100°C, zweckmäßig bei einer Temperatur zwischen 10 und 60°C, vorzugsweise bei 20 bis 50°C durchgeführt.

Als flüssiges Mahlmedium werden zweckmäßig Wasser, $C_1$-$C_8$-Alkanole, vorteilhaft mit Wasser mischbare Alkanole, wie z.B. Methanol, Ethanol, n-Propanol, Isopropanol, n-Butanol, tert.-Butanol, Isobutanol, Pentanol, Hexanol, Alkylhexanole, Ethylenglykol, Propylenglykol oder Glycerin; cyclische Alkanole wie z.B. Cyclohexanol; $C_1$-$C_5$-Dialkylketone wie z.B. Aceton, Diethylketon, Methylisobutylketon oder Methylethylketon; oder Mischungen dieser Lösungsmittel mit Wasser verwendet. Besonders bevorzugt sind Wasser und Lösungen von $C_1$-$C_6$-Alkoholen in Wasser.

In einer bevorzugten Ausführungsform der vorliegenden Erfindung wird Perylen-3,4,9,10-tetracarbonsäurediimid in transparenter Pigmentform hergestellt, indem man von Persäure, wie vorstehend definiert, und Ammoniak ausgeht und pro Mol Persäure die mindestens 2-fach molare Menge Ammoniak und eine mindestens 3-fache Gewichtsmenge Wasser, bezogen auf das Gewicht der Persäure, einsetzt, die Reaktion bei einer Temperatur von 50 bis 200°C durchführt und, vorzugsweise ohne Zwischenisolierung, das erhaltene Rohpigment in einem flüssigen Medium, wie vorstehend beschrieben, auf einer Rührwerkskugelmühle, die mit einer Leistungsdichte von mehr als 1,0 kW pro Liter Mahlraum und einer Rührwerksumfangsgeschwindigkeit von mehr als 12 m/s betrieben wird, unter der Einwirkung von Mahlkörpern vom Durchmesser gleich oder kleiner als 0,9 mm naßvermahlt und das erhaltene Pigment isoliert.

Dabei kann die Persäure in trockener Form oder als Preßkuchen eingesetzt werden. Vorzugsweise wird eine 5- bis 15-fache, insbesondere eine 6- bis 10-fache Gewichtsmenge Wasser, bezogen auf das Gewicht der Persäure, eingesetzt.

Vorzugsweise wird eine 2,5- bis 10-fach molare Menge, insbesondere 3- bis 6-fach molare Menge, Ammoniak pro Mol Persäure eingesetzt. Der Ammoniak wird vorzugsweise in wäßriger Lösung zugegeben, kann aber auch gasförmig eingeleitet werden. Die Umsetzung der Persäure mit Ammoniak erfolgt vorzugsweise bei einer Temperatur zwischen 100 und 180°C, gegebenenfalls unter Druck. Nach Beendigung der Umsetzung wird überschüssiger Ammoniak zweckmäßigerweise abdestilliert, vorteilhaft bei Normaldruck und bis zum Erreichen von etwa 100°C am Destillationsübergang. Obwohl es vorteilhaft ist, allen überschüssigen Ammoniak vor dem Mahlprozeß zu entfernen, kann der Ammoniak auch erst später entfernt werden, beispielsweise nach dem Mahlprozeß oder erst bei der Isolierung des Pigments.
Der abdestillierte Ammoniak kann wieder für eine nächste Kondensationsreaktion eingesetzt werden.
Gegebenenfalls wird vor der Naßmahlung und/oder vor der Filtration mit etwas Säure neutralisiert, um Geruchsbelästigungen auszuschließen.

Das Mahlgut kann außer der flüssigen Phase und dem Rohpigment noch Hilfsmittel, wie z.B. Tenside, Pigmentdispergatoren, Füllstoffe, Stellmittel, Harze, Entschäumer, Antistaubmittel, Extender, Farbmittel zum Nuancieren, Konservierungsmittel, Trocknungsverzögerungsmittel, Additive zur Steuerung der Rheologie oder eine Kombination davon enthalten.

Die Zugabe der vorstehend genannten Hilfsmittel kann in einem oder mehreren beliebigen Zeitpunkten im Verlauf des gesamten Pigmentherstellungsprozesses erfolgen, vorzugsweise vor der Kondensation oder vor der Naßmahlung, aber auch während der Kondensation, während der Naßmahlung, vor oder während der Isolierung, vor oder während der Trocknung oder zum trockenen Pigment (Pulver oder Granulat), auf einmal oder in mehreren Portionen. Die Gesamtmenge der zugegebenen Hilfsmittel kann 0 bis 40 Gew.-%, bevorzugt 1 bis 25 Gew.-%, besonders bevorzugt 5 bis 15 Gew.-%, bezogen auf das Rohpigment, betragen.

Als Tenside kommen anionische oder anionaktive, kationische oder kationaktive und nichtionische Substanzen oder Mischungen dieser Mittel in Betracht. Bevorzugt sind solche Tenside oder Mischungen von Tensiden, die bei der Destillation des Ammoniaks und bei der Naßmahlung nicht schäumen.

Als anionaktive Substanzen kommen beispielsweise Fettsäuretauride, Fettsäure-N-methyltauride, Fettsäureisäthionate, Alkylphenylsulfonate, Alkylnaphthalinsulfonate, Alkylphenolpolyglykolethersulfate, Fettalkoholpolyglykolethersulfate, Fettsäureamidpolyglykolethersulfate, Alkylsulfosuccinamate, Alkenylbemsteinsäurehalbester, Fettalkoholpolyglykolethersulfosuccinate, Alkansulfonate, Fettsäureglutamate, Alkylsulfosuccinate, Fettsäuresarkoside; Fettsäuren, z.B. Palmitin-, Stearin- und Ölsäure; Seifen, z.B. Alkalisalze von Fettsäuren, Naphthensäuren und Harzsäuren, z.B. Abietinsäure, alkalilösliche Harze, z.B. kolophoniummodifizierte Maleinatharze und Kondensationsprodukte auf Basis von Cyanurchlorid, Taurin, N,N'-Diethylaminopropylamin und p-Phenylendiamin in Betracht. Besonders bevorzugt sind Harzseifen, d.h. Alkalisalze von Harzsäuren.

Als kationaktive Substanzen kommen beispielsweise quatemäre Ammoniumsalze, Fettaminoxalkylate, oxalkylierte Polyamine, Fettaminopolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen in Betracht.

Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäurester von Fettalkoholen oder Fettalkoholpolyglykolethem, Fettsäureamidethoxylate, Fettalkohol-alkylenoxid-Addukte und Alkylphenolpolyglykolether in Betracht.

Als Pigmentdispergatoren können Verbindungen der allgemeinen Formel (II),

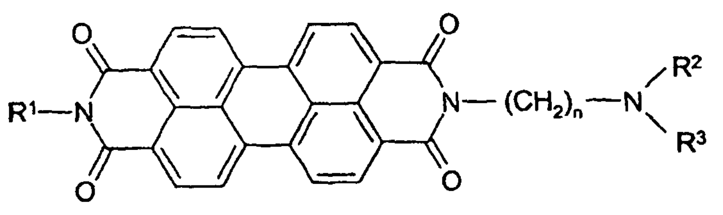

(II)

eingesetzt werden, in welcher

| | |
|---|---|
| $R^1$ | ein Wasserstoffatom, eine Hydroxy- oder Aminogruppe oder eine $C_1$-$C_8$-Alkylgruppe, die durch 1 bis 4 Chlor- oder Bromatome, eine Phenyl-, Cyan-, Hydroxy-, Carbamoyl-, $C_2$-$C_4$-Acyl- oder $C_1$-$C_4$-Alkoxygruppe substituiert sein kann oder perfluoriert oder teilfluoriert ist; |
| $R^2$ und $R^3$ | unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teil-oder perfluorierte Alkenylgruppe mit 2 bis 20 Kohlenstoffatomen darstellen, wobei die Substituenten Hydroxy, Phenyl, Cyano, Chlor, Brom, $C_2$-$C_4$-Acyl oder $C_1$-$C_4$-Alkoxy sein können oder $R^2$ und $R^3$ zusam- |

men mit dem N-Atom einen gesättigten, ungesättigten oder aromatischen heterocyclischen Ring bilden, der gegebenenfalls ein weiteres Stickstoff-, Sauerstoff- oder Schwefelatom im Ring enthält; und

n eine Zahl von 1 bis 6 ist;

und/oder es werden Verbindungen mit der allgemeinen Formel (III)

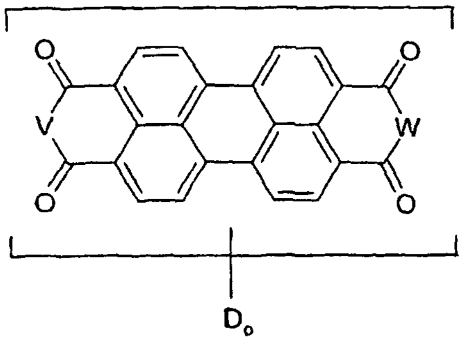

(III)

eingesetzt, in welcher

V einen bivalenten Rest -O-, $>NR^4$ oder $>NR^5-Y^- X^+$,
W den bivalenten Rest $>NR^5-Y^- X^+$ bedeutet,
o eine Zahl von 0 bis 8 ist, und wenn o > 0 ist,
D ein Chlor- oder Bromatom und, sofern o > 1 ist, ggf. eine Kombination davon darstellt,
$R^4$ für ein Wasserstoffatom oder eine $C_1$-$C_{18}$-Alkylgruppe, insbesondere $C_1$-$C_4$-Alkyl, oder für eine Phenylgruppe steht, die unsubstituiert oder durch Halogen, $C_1$-$C_4$-Alkyl, $C_1$-$C_4$-Alkoxy oder Phenylazo ein- oder mehrfach substituiert sein kann,
$R^5$ für eine $C_1$-$C_{18}$-Alkylengruppe steht, die innerhalb der C-C-Kette durch ein Brückenglied aus der Reihe -O-, $-NR^6-$, -S-, Phenylen, -CO-, $-SO_2-$ oder $-CR^7R^8-$ oder eine chemisch sinnvolle Kombination davon ein- oder mehrfach unterbrochen sein kann und in dem die Reste $R^6$, $R^7$ und $R^8$ unabhängig voneinander jeweils ein Wasserstoffatom oder eine $C_1$-$C_4$-Alkylgruppe sind, die unsubstituiert oder durch einen heterocyclischen Rest, vorzugsweise vom Imidazol- oder Piperazin-Typ, substituiert sein kann,
oder $R^5$ für eine Phenylengruppe steht, die unsubstituiert oder durch $C_1$-$C_4$-Alkyl oder $C_1$-$C_4$-Alkoxy ein- oder mehrfach substituiert sein kann,
$Y^-$ einen der anionischen Reste $-SO_3^-$ oder $-COO^-$ bedeutet, und
$X^+$ die Bedeutung $H^+$ oder das Äquivalent

$$\frac{M^{m+}}{m}$$

eines Metalikations aus der 1. bis 5. Hauptgruppe oder aus der 1. oder 2. oder der 4. bis 8. Nebengruppe des Periodensystems der chemischen Elemente hat, wobei m eine der Zahlen 1, 2 oder 3 ist,
oder ein Ammoniumion $N^+R^9R^{10}R^{11}R^{12}$ definiert, wobei die Substituenten $R^9$, $R^{10}$, $R^{11}$ und $R^{12}$ unabhängig voneinander jeweils ein Wasserstoffatom oder eine Gruppe aus der Reihe $C_1$-$C_{30}$-Alkyl, $C_2$-$C_{30}$-Alkenyl, $C_5$-$C_{30}$-Cycloalkyl, unsubstituiertes oder durch $C_1$-$C_8$-alkyliertes Phenyl oder eine (Poly)alkylenoxygruppe

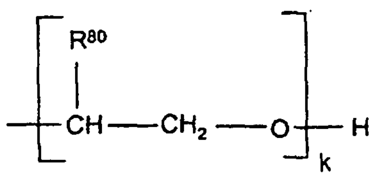

sind,

in der $R^{80}$ für Wasserstoff oder $C_1$-$C_4$-Alkyl steht und k eine Zahl von 1 bis 30 ist;
und worin als $R^9$, $R^{10}$, $R^{11}$ und $R^{12}$ ausgewiesenes Alkyl, Alkenyl, Cycloalkyl, Phenyl oder Alkylphenyl durch Amino, Hydroxy und/oder Carboxy substituiert sein können;
oder wobei die Substituenten $R^9$ und $R^{10}$ zusammen mit dem quartären N-Atom ein fünf- bis siebengliedriges gesättigtes Ringsystem, das ggf. noch weitere Heteroatome enthält, bilden können;
oder wobei die Substituenten $R^9$, $R^{10}$ und $R^{11}$ zusammen mit dem quartären N-Atom ein fünf- bis siebengliedriges aromatisches Ringsystem, das ggf. noch weitere Heteroatome enthält und an dem ggf. zusätzliche Ringe ankondensiert sind, bilden können;

und/oder es werden Verbindungen mit der allgemeinen Formel (IV)

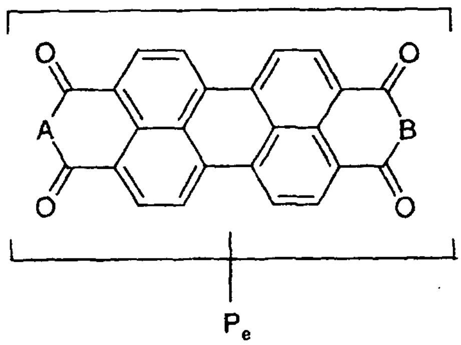

(IV)

eingesetzt, in welcher

A einen kationischen bivalenten Rest der Formel

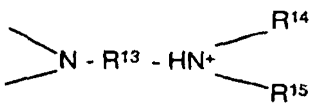

und

B einen anionischen bivalenten Rest der Formel

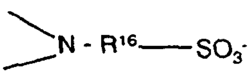

oder

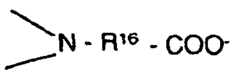

bedeutet,

| | |
|---|---|
| e | eine Zahl von 0 bis 8 ist, und wenn e > 0 ist, |
| P | ein Chlor- oder Bromatom und, sofern e > 1 ist, ggf. eine Kombination davon darstellt, |
| $R^{13}$ | für eine $C_1$-$C_{12}$-Alkylengruppe, eine ($C_6$-$C_{10}$-Aryl)-($C_1$-$C_6$)-alkylengruppe oder eine ($C_6$-$C_{10}$)-Arylengruppe steht, |
| $R^{14}$ und $R^{15}$ | gleich oder verschieden sind und ein Wasserstoffatom, einen substituierten oder unsubstituierten $C_1$-$C_{20}$-Alkylrest oder einen substituierten oder unsubstituierten $C_2$-$C_{20}$-Alkenylrest bedeuten, oder |
| $R^{14}$ und $R^{15}$ | zusammen mit dem angrenzenden N-Atom ein heterocyclisches Ringsystem bilden, das ggf noch weitere ringangehörige Heteroatome, N, S und/oder O enthält und an das ggf. zusätzliche Ringe ankondensiert sind, und |
| $R^{16}$ | eine geradkettige oder verzweigte $C_1$-$C_{12}$-Alkylengruppe darstellt; |

und/oder es werden Verbindungen mit der allgemeinen Formel (V)

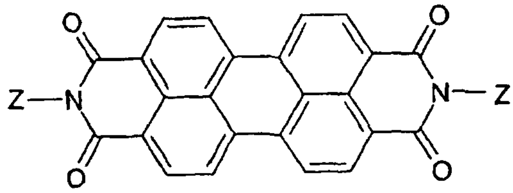

(V)

eingesetzt, in welcher die beiden Reste Z gleich oder verschieden sind und Z die Bedeutung $Z^1$, $Z^2$, $Z^3$ oder $Z^4$ hat, mit der Maßgabe, daß beide Reste Z nicht gleichzeitig $Z^4$ sind, wobei

$Z^1$ ein Rest der Formel (Va) ist,

$$- [X- Y]_q- [X^1-Y^1]_r-[X^2 -NH]_sH \qquad (Va)$$

worin

X, $X^1$ und $X^2$ gleich oder verschieden sind und einen verzweigten oder unverzweigten $C_2$-$C_6$-Alkylenrest oder einen $C_5$-$C_7$-Cycloalkylenrest bedeuten, der durch 1 bis 4 $C_1$-$C_4$-Alkylreste, Hydroxyreste, Hydroxyalkylreste mit 1 bis 4 Kohlenstoffatomen und/oder durch 1 bis 2 weitere $C_5$-$C_7$-Cycloalkylreste substituiert sein kann;

Y und $Y^1$ gleich oder verschieden sind und eine NH-, -O-, N($C_1$-$C_6$-alkyl)-Gruppe, oder

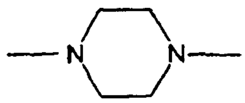

bedeuten;

q eine Zahl von 1 bis 6;

r und s unabhängig voneinander eine Zahl von 0 bis 6, wobei r und s nicht gleichzeitig Null sind;

und worin

$Z^2$ ein Rest der Formel (Vb) ist,

$$-[X-O]_{q1}-[X^1-O]_qH \qquad (Vb)$$

worin

q1 eine Zahl von 0 bis 6;

und worin

$Z^3$ ein Rest der Formel (Vc) ist,

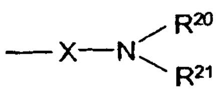

(Vc)

worin

$R^{20}$ und $R^{21}$ unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teil- oder perfluorierte Alkenylgruppe mit 2 bis 20 Kohlenstoffatomen darstellen, wobei die Substituenten Hydroxy, Phenyl, Cyano, Chlor, Brom, $C_2$-$C_4$-Acyl oder $C_1$-$C_4$-Alkoxy sein können, oder

$R^{20}$ und $R^{21}$ zusammen mit dem N-Atom einen gesättigten, ungesättigten oder aromatischen heterocyclischen Ring bilden, der gegebenenfalls ein weiteres Stickstoff-, Sauerstoff- oder Schwefelatom im Ring enthält; und

X die oben genannte Bedeutung hat;

und worin

$Z^4$ Wasserstoff, Hydroxy, Amino, Phenyl oder $C_1$-$C_{20}$-Alkyl ist, wobei der Phenylring und die Alkylgruppe durch ein oder mehrere Substituenten aus der Gruppe Cl, Br, CN, OH, $C_6H_5$, Carbamoyl, $C_2$-$C_4$-Acyl und $C_1$-$C_4$-Alkoxy substituiert sein können, der Phenylring auch durch $NR^{20}R^{21}$ substituiert sein kann, wobei $R^{20}$ und $R^{21}$ die oben genannte Bedeutung haben, oder die Alkylgruppe perfluoriert oder teilfluoriert ist.

Vorzugsweise wird das Pigment direkt nach der Naßmahlung isoliert. Es ist aber möglich, eine Nachbehandlung (Finish) mit Wasser und/oder einem organischen Lösemittel durchzuführen, beispielsweise bei Temperaturen von 20 bis 180°C. Es ist auch möglich, die nach der Mahlung vorliegenden Pigmentsuspensionen einzudampfen oder sprühzutrocknen, so daß eine Filtration entfallen kann.

Die Herstellung der Perylimid-Pigmente nach dem erfindungsgemäßen Verfahren erfolgt im wesentlichen ohne Abfallprodukte. Die wenigen Chemikalien können weiterverarbeitet oder wieder vollständig regeneriert werden.

Es war überraschend und nicht vorhersehbar, daß die Herstellung von transparenten Perylimid-Pigmenten in dieser einfachen und technisch eleganten Weise ohne ökologische Probleme möglich ist, da nach den bekannten Verfahren die Herstellung von transparenten Perylimid-Pigmenten nur in mehrstufigen Prozessen und/oder mit erheblichen ökologischen Belastungen gelingt. Nach dem erfindungsgemäßen Verfahren hergestellte Perylimid-Pigmente sind in ihren coloristischen und anwendungstechnischen Eigenschaften den nach bekannten Verfahren hergestellten Pigmenten deutlich überlegen.

Mit den nach dem erfindungsgemäßen Verfahren hergestellten Perylimid-Pigmenten können Automobillacke, insbesondere Metalliclacke mit hoher Pigmentkonzentration hergestellt werden. Es werden transparente und glänzende Lackierungen mit sehr guter Überlackierechtheit und Wetterechtheit erhalten. Die Farbkonzentrate (mill bases) und die Lacke besitzen außerdem sehr gutes Fließverhalten bei hoher Pigmentkonzentration und eine hervorragende Flockungsstabilität.

Erfindungsgemäß hergestellte Perylimid-Pigmente eignen sich zum Pigmentieren von hochmolekularen natürlichen oder synthetischen organischen Materialien, wie beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmente als Blends oder in Form von Präparationen oder Dispersionen zu benutzen. Bezogen auf das zu pigmentierende, hochmolekulare organische Material setzt man die erfindungsgemäß hergestellten Pigmente in einer Menge von vorzugsweise 0,05 bis 30 Gew.-%, vorzugsweise 0,1 bis 15 Gew.-% ein.

Mit den nach dem erfindungsgemäßen Verfahren hergestellten Pigmenten können die technisch gängigen Einbrennlacke aus der Klasse der Alkyd-Melamin-Harzlacke, Acryl-Melamin-Harzlacke, Polyesterlacke, Highsolidacrylharzlacke, wäßrige Lacke auf Polyurethanbasis sowie Zweikomponentenlacke auf Basis polyisocyanatvernetzbarer Acrylharze und insbesondere Automobil-Metallic-Lacke pigmentiert werden.

Die erfindungsgemäß hergestellten Pigmente sind auch geeignet als Farbmittel in elektrophotographischen Tonern und Entwicklern, wie z. B. Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäß hergestellten Pigmente geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder

Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Pigmente als Farbmittel in Ink-Jet Tinten auf wäßriger und nichtwäßriger Basis sowie in solchen Tinten, die nach dem hot-melt-Verfahren arbeiten, geeignet.

Darüber hinaus sind die erfindungsgemäß hergestellten Pigmente auch als Farbmittel für Farbfilter, sowohl für die subtraktive als auch für die additive Farberzeugung, geeignet.

Zur Beurteilung der Eigenschaften der nach der Erfindung hergestellten Pigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat, ein High-Solid-Acrylharzeinbrennlack auf Basis einer nichtwäßrigen Dispersion (HS) sowie ein wäßriger Lack auf Polyurethanbasis (PUR) ausgewählt.
Die Bestimmung der Farbstärke und des Farbtons erfolgte nach DIN 55986.
Die Rheologie des Mahlguts nach der Dispergierung (mill base-Rheologie) wurde anhand der folgenden fünfstufigen Skala bewertet:

5 dünnflüssig
4 flüssig
3 dickflüssig
2 leicht gestockt
1 gestockt

Nach dem Verdünnen des Mahlguts auf die Pigmentendkonzentration wurde die Viskosität mit dem Viskospatel nach Rossmann, Typ 301 der Firma Erichsen beurteilt.
Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.
Die Bestimmung der Lösemittelechtheit erfolgte nach DIN 55976.
Die Bestimmung der Überlackierechtheit erfolgte nach DIN 53221.

In den nachstehenden Beispielen beziehen sich Teile jeweils auf Gewichtsteile und Prozente jeweils auf Gewichtsprozente der so beschriebenen Substanzen.

Beispiel 1

In einem Druckrührgefäß werden 1000 Teile Wasser vorgelegt und unter Rühren 140 Teile Perylen-3,4,9,10-tetracarbonsäuredianhydrid und 60,5 Teile einer 25 %igen wäßrigen Ammoniaklösung zugegeben. Es wird auf 150°C erhitzt und 5 Stunden bei 150°C unter Druck gerührt. Nach dem Abkühlen wird durch eine Wasserdampfdestillation der Ammoniak entfernt. Dann wird Wasser abdestilliert, bis die Suspension gerade noch rührbar ist. Mit 10 %iger wäßriger Natronlauge wird pH 12,1 eingestellt.
Man erhält 1131 Teile Rohpigmentsuspension 8,8 %ig.

Beispiel 1a

Zu 200,8 Teilen einer Rohpigmentsuspension 8,8 %ig, hergestellt gemäß Beispiel 1, werden 9,6 Teile eines Kondensationsproduktes auf Basis von Cyanurchlorid, Taurin, N,N'-Diethylaminopropylamin und p-Phenylendiamin 18,4 %ig zugegeben. Mit 10 %iger wäßriger Natronlauge wird pH 12,1 eingestellt. 100,9 Teile dieser Suspension werden mit 360 Teilen Zirkonmischoxidperlen von Durchmesser 0,3-0,4 mm als Mahlkörper in eine Rührwerkskugelmühle (Hersteller: Draiswerke GmbH, Mannheim) gefüllt und 15 Minuten lang mit einer Umfangsgeschwindigkeit von 12,1 m/s und einer Leistungsdichte von 1,3 kW/l Mahlraum bei 20°C gemahlen. Danach werden die Mahlkörper durch Sieben vom Mahlgut abgetrennt.
Die Mahlung wird mit weiteren 97,5 Teilen dieser Suspension und 360 Teilen Zirkonmischoxidperlen nochmals durchgeführt.
Die von den Perlen getrennten Mahlgüter werden vereinigt, mit wäßriger Salzsäure 10 %ig wird pH 1,9 eingestellt, dann wird abgesaugt, mit Wasser gewaschen und bei 80°C getrocknet.
Man erhält 16,6 Teile Pigment.

Im PUR-Lack werden rotviolette, transparente und farbstarke Lackierungen erhalten. Die Rheologie wird mit 4-5 bewertet. Die Metalliclackierung ist farbstark und farbtief.

Beispiel 1b

94,1 Teile einer Rohpigmentsuspension 8,8 %ig, hergestellt gemäß Beispiel 1a, werden mit 360 Teilen Zirkonmischoxidperlen von Durchmesser 0,3-0,4 mm als Mahlkörper in eine Rührwerkskugelmühle (Hersteller: Draiswerke GmbH, Mannheim) gefüllt und 15 Minuten lang mit einer Umfangsgeschwindigkeit von 15,7 m/s und einer Leistungsdichte von 3,1 kW/l Mahlraum bei 20°C gemahlen. Danach werden die Mahlkörper durch Sieben vom Mahlgut abgetrennt. Die Mahlung wird mit weiteren 91,7 Teilen der Rohpigmentsuspension und 360 Teilen Zirkonmischoxidperlen nochmals durchgeführt.
Die beiden von den Perlen abgetrennten Mahlgüter werden vereinigt, mit wäßriger Salzsäure 10 %ig wird pH 1,9 eingestellt, dann wird abgesaugt, mit Wasser gewaschen und bei 80 °C getrocknet.
Man erhält 14 Teile Pigment.
Im PE-Lack werden rotviolette, transparente und farbstarke Lackierungen erhalten. Die Rheologie wird mit 4 bewertet, die Glanzmessung ergibt den Wert 57. Die Metalliclackierung ist farbstark und farbtief.

Beispiel 1c

Zu 201,7 Teilen einer Rohpigmentsuspension 8,8 %ig, hergestellt gemäß Beispiel 1a, werden 1,8 Teile Pigmentdispergator der allgemeinen Formel (III), wobei in den bivalenten Resten V und W dieser Formel $R^5$ je eine Ethylengruppe, $Y^-$ den Rest $-CO_2^-$, $X^+$ ein Proton bedeutet und o die Zahl 0 ist, zugegeben. Mit 10 %iger wäßriger Natronlauge wird pH 12,0 eingestellt. 108,2 Teile dieser Suspension werden mit 360 Teilen Zirkonmischoxidperlen von Durchmesser 0,3-0,4 mm als Mahlkörper werden in eine Rührwerkskugelmühle (Hersteller: Draiswerke GmbH, Mannheim) gefüllt und 15 Minuten lang mit einer Umfangsgeschwindigkeit von 15,7 m/s und einer Leistungsdichte von 3,1 kW/l Mahlraum bei 20°C gemahlen. Danach werden die Mahlkörper durch Sieben vom Mahlgut abgetrennt.
Die Mahlung wird mit weiteren 92,3 Teilen dieser Suspension nochmals durchgeführt.
Die beiden von den Perlen getrennten Mahlgüter werden vereinigt, mit wäßriger Salzsäure 10 %ig wird pH 1,9 eingestellt, dann wird abgesaugt, mit Wasser gewaschen und bei 80°C getrocknet.
Man erhält 18,1 Teile Pigment.
Im PUR-Lack werden rotviolette, transparente und farbstarke Lackierungen erhalten. Die Rheologie wird mit 4-5 bewertet. Die Metalliclackierung ist farbstark und farbtief.

Beispiel 2

Die Beispiele 2a und 2b werden nach dem erfindungsgemäßen Verfahren hergestellt, die Beispiele 2c bis 2f werden in Anlehnung an die DE-A- 20 43 820 hergestellt, die im Vergleich zum erfindungsgemäßen Verfahren den Einsatz von herkömmlichen schnelllaufenden Rührwerkskugelmühlen niedrigerer Energiedichte offenbart.

Beispiel 2a

10 Teile Rohperylimid, hergestellt gemäß BIOS Final Report Nr. 1484 Seite 21, werden in 90 Teilen Wasser suspendiert. Mit 10%iger wässriger Natronlauge wird pH 12 eingestellt. Nach Zugabe von 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 15 Minuten lang mit einer Umfangsgeschwindigkeit von 15,7 m/s und einer Leistungsdichte von 3,1 kW/l Mahlraum bei 20°C gemahlen. Danach werden die Mahlkörper durch Sieben vom Mahlgut abgetrennt, mit 10%iger wässriger Salzsäure wird pH 1,8 eingestellt, dann wird abgesaugt, mit Wasser gewaschen und bei 80°C getrocknet.
Man erhält 9,4 Teile Pigment.

Beispiel 2b

10 Teile Rohperylimid, hergestellt gemäß BIOS Final Report Nr. 1484 Seite 21, werden in 90 Teilen 7%iger wässriger Natronlauge suspendiert. Nach Zugabe von 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 15 Minuten lang mit einer Umfangsgeschwindigkeit von 15,7 m/s und einer Leistungsdichte von 3,1 kW/l Mahlraum bei 20°C gemahlen.
Danach werden die Mahlkörper durch Sieben vom Mahlgut abgetrennt, mit 10%iger wässriger Salzsäure wird pH 1,8

eingestellt, dann wird abgesaugt, mit Wasser gewaschen und bei 80°C getrocknet.
Man erhält 9,4 Teile Pigment.

Beispiel 2c (Vergleichsbeispiel)

50 Teile Rohperylimid, hergestellt gemäß BIOS Final Report Nr. 1484 Seite 21, werden in 260 Teilen Wasser suspendiert, mit 10%iger wässriger Natronlauge wird pH 12 eingestellt. Nach Zugabe von 3045 Teilen Stahlkugeln von Durchmesser 2 mm als Mahlkörper wird die Suspension in eine Rührwerkskugelmühle mit Scheibenrührwerk (Hersteller: Draiswerke GmbH, Mannheim) gefüllt und 75 Minuten lang mit einer Umfangsgeschwindigkeit von 10,2 m/s und einer Leistungsdichte von 0,45 kW/l Mahlraum bei 20°C gemahlen. Danach werden die Mahlkörper durch Sieben vom Mahlgut abgetrennt, mit 10%iger wässriger Salzsäure wird pH 1,8 eingestellt, dann wird abgesaugt, mit Wasser gewaschen und bei 80°C getrocknet. Man erhält 45 Teile Pigment.

Beispiel 2d (Vergleichsbeispiel)

Es wird wie in Beispiel 2c verfahren mit dem einzigen Unterschied, dass nur 15 Minuten gemahlen wird.
Man erhält 45 Teile Pigment.

Beispiel 2e (Vergleichsbeispiel)

70 Teile Rohperylimid, hergestellt gemäß BIOS Final Report Nr. 1484 Seite 21, werden in 451 Teilen 7%iger wässriger Natronlauge suspendiert. Nach Zugabe von 3045 Teilen Stahlkugeln von Durchmesser 2 mm als Mahlkörper wird die Suspension in eine Rührwerkskugelmühle mit Scheibenrührwerk (Hersteller: Draiswerke GmbH, Mannheim) gefüllt und 75 Minuten lang mit einer Umfangsgeschwindigkeit von 10,2 m/s und einer Leistungsdichte von 0,45 kW/l Mahlraum bei 20°C gemahlen. Danach werden die Mahlkörper durch Sieben vom Mahlgut abgetrennt, mit 10%iger wässriger Salzsäure wird pH 1,8 eingestellt, dann wird abgesaugt, mit Wasser gewaschen und bei 80°C getrocknet.
Man erhält 60 Teile Pigment.

Beispiel 2f (Vergleichsbeispiel)

Es wird wie in Beispiel 2e verfahren mit dem einzigen Unterschied, dass nur 15 Minuten gemahlen wird.
Man erhält 60 Teile Pigment.

Beispiel 2g

Mit den Pigmenten, hergestellt gemäß der Beispiele 2a bis 2f, werden im HS-Lack Lackierungen hergestellt. Die Lackierungen der Pigmente aus Beispielen 2a und 2b, hergestellt nach dem erfindungsgemäßen Verfahren, sind im Vergleich zu den Lackierungen der Pigmente aus Beispielen 2 c bis 2 f im Vollton transparenter, in der Aufhellung farbstärker und im Metallic farbstärker und farbtiefer. Bei Anwendung des Verfahrens gemäß DE-A 20 43 820 werden demnach auch bei einer dreifach längeren Mahldauer (Beispiele 2c und 2e) und deutlich höheren Konzentrationen an Natronlauge (Beispiele 2e und 2f) im Vergleich zum erfindungsgemäßen Verfahren Produkte mit deutlich unterlegenen Eigenschaften erhalten.

Beispiel 3

10 Teile Rohperylimid, hergestellt gemäß BIOS Final Report Nr. 1484 Seite 21, und 2,2 Teile Presskuchen (23,2 %ig) von Pigmentdispergator, hergestellt gemäß EP-A-0 321 919 Beispiel 17, werden in 88,3 Teilen Wasser suspendiert. Mit 10%iger wässriger Natronlauge wird pH 12,1 eingestellt. Nach Zugabe von 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 15 Minuten lang mit einer Umfangsgeschwindigkeit von 15,7 m/s bei 20°C gemahlen. Die Mahlung wird ein zweites Mal wiederholt und die Suspensionen vereinigt. Danach werden die Mahlkörper durch Sieben vom Mahlgut abgetrennt, dann wird abgesaugt, mit Wasser gewaschen und bei 80°C getrocknet. Man erhält 20,2 Teile Pigment.
Im HS-Lack werden rotviolette, transparente und farbstarke Lackierungen erhalten. Die Rheologie wird mit 4-5 bewertet, die Glanzmessung ergibt den Wert 77. Die Metalliclackierung ist farbstark und farbtief.

Beispiel 4

In einem Druckrührgefäß werden 1300 Teile Wasser vorgelegt und unter Rühren 130 Teile Perylen-3,4,9,10-tetracarbonsäuredianhydrid und 78,6 Teile einer 25 %igen wässrigen Ammoniaklösung zugegeben. Es wird auf 150°C erhitzt und 5 Stunden bei 150°C unter Druck gerührt. Nach dem Abkühlen wird durch eine Wasserdampfdestillation der Ammoniak entfernt. Das Rohpigment wird filtriert, gewaschen und bei 80°C getrocknet.
Man erhält 127 g Rohperylimid.

Beispiel 4a

10 Teile Rohperylimid, hergestellt gemäß Beispiel 4, werden in 85,5 Teilen Wasser und 4,5 Teilen Ethanol suspendiert. Nach Zugabe von 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 15 Minuten lang mit einer Umfangsgeschwindigkeit von 15,7 m/s bei 20°C gemahlen. Die Mahlung wird dreimal wiederholt und die Suspensionen vereinigt. Danach werden die Mahlkörper durch Sieben vom Mahlgut abgetrennt, mit 10%iger wässriger Salzsäure wird pH 2 eingestellt. Dann wird abgesaugt, mit Wasser gewaschen und bei 80°C getrocknet.
Man erhält 39,1 Teile Pigment.
19,5 Teile des Pigments werden mit 1,95 Teilen Pigmentdispergator, hergestellt gemäß DE-A-198 35 757 Beispiel 2, mechanisch gemischt.
Mit dieser Pigmentzubereitung werden im HS-Lack rotviolette und farbstarke Lackierungen erhalten. Die Rheologie wird mit 4 bewertet, die Glanzmessung ergibt den Wert 75, die Viskosität beträgt 1,1 sec. Die Metalliclackierung ist farbstark und farbtief.

Beispiel 4b (nicht zur Erfindung gehörend)

10 Teile Rohperylimid, hergestellt gemäß Beispiel 4, werden in 85,5 Teilen Wasser und 4,5 Teilen N-Methylpyrrolidon suspendiert. Nach Zugabe von 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 15 Minuten lang mit einer Umfangsgeschwindigkeit von 15,7 m/s bei 20°C gemahlen. Die Mahlung wird dreimal wiederholt und die Suspensionen vereinigt. Danach werden die Mahlkörper durch Sieben vom Mahlgut abgetrennt, mit 10%iger wässriger Salzsäure wird pH 2 eingestellt. Dann wird abgesaugt, mit Wasser gewaschen und bei 80°C getrocknet.
Man erhält 39 Teile Pigment.
Im HS-Lack werden rotviolette und farbstarke Lackierungen erhalten. Die Rheologie wird mit 4-5 bewertet. Die Metalliclackierung ist farbstark und farbtief. Im PUR-Lack werden ebenfalls rotviolette und farbstarke Lackierungen erhalten, die Rheologie wird mit 5 bewertet, die Metalliclackierung ist farbstark und farbtief.

Beispiel 5

10 Teile Rohperylimid, hergestellt gemäß BIOS Final Report Nr. 1484 Seite 21, und 0,5 Teile Pigmentdispergator, hergestellt gemäß DE-A-198 35 757 Beispiel 4, werden in 90 Teilen Wasser suspendiert. Mit 10%iger wässriger Natronlauge wird pH 12,4 eingestellt. Nach Zugabe von 360 Teilen Zirkonmischoxidperlen von Durchmesser 0,3-0,4 mm als Mahlkörper wird die Suspension in eine Rührwerkskugelmühle (Hersteller: Draiswerke GmbH, Mannheim) gefüllt und 15 Minuten lang mit einer Umfangsgeschwindigkeit von 15,7 m/s bei 20°C gemahlen. Die Mahlung wird ein zweites Mal wiederholt und die Suspensionen vereinigt. Danach werden die Mahlkörper durch Sieben vom Mahlgut abgetrennt, mit 10%iger wässriger Salzsäure wird pH 2 eingestellt. Dann wird abgesaugt, mit Wasser gewaschen und bei 80°C getrocknet.
Man erhält 20,0 Teile Pigment.
Im PUR-Lack werden rotviolette, transparente und farbstarke Lackierungen erhalten. Die Rheologie wird mit 4 bewertet. Die Metalliclackierung ist farbstark und farbtief.

## Patentansprüche

1. Verfahren zur Herstellung transparenter Perylimid-Pigmente der Formel (I)

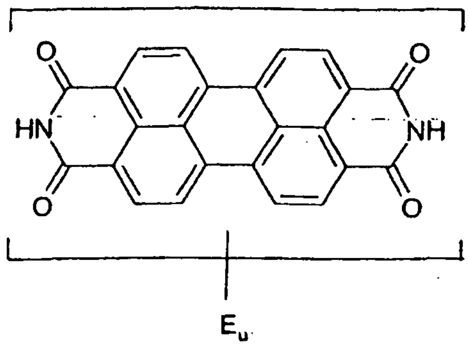

(I)

worin

u eine Zahl von 0 bis 8 ist, und wenn u > 0 ist,
E ein Chlor- oder Bromatom und, sofern u > 1 ist, ggf. eine Kombination davon darstellt, **dadurch gekennzeichnet, dass** man ein Perylimid-Rohpigment in einem flüssigen Medium auf einer Rührwerkskugelmühle, die mit einer Leistungsdichte von mehr als 1,0 kW pro Liter Mahlraum und einer Rührwerksumfangsgeschwindigkeit von mehr als 12 m/s betrieben wird, unter der Einwirkung von Mahlkörpern vom Durchmesser gleich oder kleiner als 0,9 mm naßvermahlt und das erhaltene Pigment isoliert, wobei das flüssige Medium Wasser, $C_1$-$C_8$Alkanole, cyclische Alkanole, $C_1$-$C_5$-Dialkylketone oder eine Mischung dieser Lösungsgsmittel mit Wasser ist.

2. Verfahren nach Anspruch 1, **dadurch gekennzeichnet, dass** das Perylimid-Rohpigment durch Verschmelzen von 1,8-Naphthalindicarbonsäureimid mit einem Alkalihydroxid und Oxidation der Leukoform, oder durch Kondensation von Perylen-3,4,9-10-tetracarbonsäure(salz) oder -carbonsäureanhydrid mit Ammoniak hergestellt worden ist.

3. Verfahren nach Anspruch 1 oder 2, **dadurch gekennzeichnet, dass** die Naßmahlung in einem wäßrigen alkalischen oder neutralen pH-Bereich durchgeführt wird.

4. Verfahren nach einem oder mehreren der Ansprüche 1 bis 3, **dadurch gekennzeichnet, dass** die Verweildauer des Mahlguts in der Rührwerkskugelmühle 5 bis 60 Minuten, bevorzugt 10 bis 45 Minuten, beträgt.

5. Verfahren nach einem oder mehreren der Ansprüche 1 bis 4, **dadurch gekennzeichnet, dass** man Perylen-3,4,9,10-tetracarbonsäure(salz) oder -carbonsäureanhydrid (Persäure) mit einer mindestens 2-fach molaren Menge Ammoniak und einer mindestens 3-fachen Gewichtsmenge Wasser, bezogen auf das Gewicht der Persäure, bei einer Temperatur von 50 bis 200°C umsetzt und das erhaltene Rohpigment gemäß Anspruch 1 naßvermahlt.

6. Verfahren nach Anspruch 5, **dadurch gekennzeichnet, dass** eine 3- bis 6-fach molare Menge Ammoniak pro Mol Persäure eingesetzt wird.

7. Verfahren nach Anspruch 5 oder 6, **dadurch gekennzeichnet, dass** eine 5- bis 15-fache Gewichtsmenge Wasser, bezogen auf das Gewicht der Persäure, eingesetzt wird.

8. Verfahren nach einem oder mehreren der Ansprüche 5 bis 7, **dadurch gekennzeichnet, dass** vor der Naßmahlung überschüssiger Ammoniak abdestilliert wird.

9. Verfahren nach einem oder mehreren der Ansprüche 5 bis 8, **dadurch gekennzeichnet, dass** die Rohpigmentsuspension ohne Zwischenisolierung der Naßmahlung zugeführt wird.

10. Verfahren nach einem oder mehreren der Ansprüche 1 bis 9, **dadurch gekennzeichnet, dass** vor oder während der Rohpigmentsynthese, vor oder während der Naßmahlung, vor oder während der Isolierung oder Trocknung des Pigments, oder zum trockenen Pigment, oder an mehreren der genannten Zeitpunkte, ein Hilfsmittel aus der Gruppe der Tenside, Pigmentdispergatoren, Füllstoffe, Stellmittel, Harze, Entschäumer, Antistaubmittel, Extruder, Farbmittel zum Nuancieren, Konservierungsmittel, Trocknungsverzögerungsmittel, Additive zur Steuerung der Rheologie, oder eine Kombination davon, zugegeben wird.

**11.** Verfahren nach Anspruch 10, **dadurch gekennzeichnet, dass** die Hilfsmittel in einer Gesamtmenge von 0 bis 40 Gew.-%, vorzugsweise 1 bis 25 Gew.-%, bezogen auf das Gewicht des Rohpigments, zugegeben werden.

**12.** Verfahren nach Anspruch 10 oder 11, **dadurch gekennzeichnet, dass** als Pigmentdispergatoren Verbindungen der Formel (II)

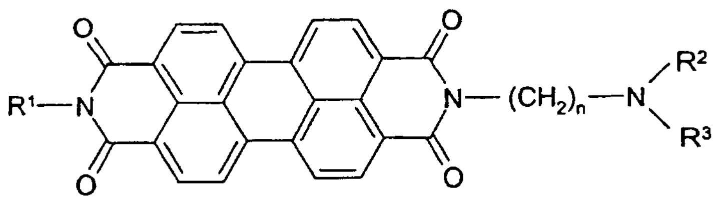

(II)

eingesetzt werden, in welcher

$R^1$ ein Wasserstoffatom, eine Hydroxy- oder Aminogruppe oder eine $C_1$-$C_8$-Alkylgruppe, die durch 1 bis 4 Chlor- oder Bromatome, eine Phenyl-, Cyan-, Hydroxy-, Carbamoyl-, $C_2$-$C_4$-Acyl- oder $C_1$-$C_4$-Alkoxygruppe substituiert sein kann oder perfluoriert oder teilfluoriert ist;
$R^2$ und $R^3$ unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teil-oder perfluorierte Alkenylgruppe mit 2 bis 20 Kohlenstoffatomen darstellen, wobei die Substituenten Hydroxy, Phenyl, Cyano, Chlor, Brom, $C_2$-$C_4$-Acyl oder $C_1$-$C_4$-Alkoxy sein können oder $R^2$ und $R^3$ zusammen mit dem N-Atom einen gesättigten, ungesättigten oder aromatischen heterocyclischen Ring bilden, der gegebenenfalls ein weiteres Stickstoff-, Sauerstoff- oder Schwefelatom im Ring enthält; und
n eine Zahl von 1 bis 6 ist;

und/oder Verbindungen mit der allgemeinen Formel (III)

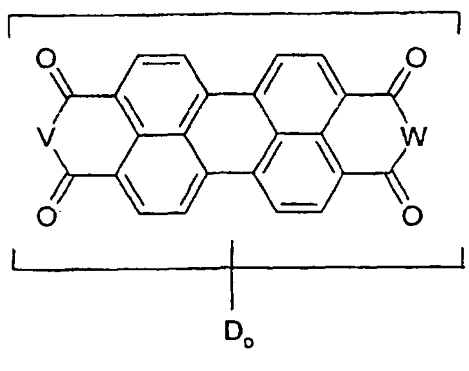

(III)

eingesetzt werden, in welcher

V einen bivalenten Rest -O-, >$NR^4$ oder >$NR^5$-$Y^-$ $X^+$,
W den bivalenten Rest >$NR^5$-$Y^-$ $X^+$ bedeutet,
o eine Zahl von 0 bis 8 ist, und wenn o > 0 ist,
D ein Chlor- oder Bromatom und, sofern o > 1 ist, ggf. eine Kombination davon darstellt,
$R^4$ für ein Wasserstoffatom oder eine $C_1$-$C_{18}$-Alkylgruppe, insbesondere $C_1$-$C_4$-Alkyl, oder für eine Phenylgruppe steht, die unsubstituiert oder durch Halogen, $C_1$-$C_4$-Alkyl, $C_1$-$C_4$-Alkoxy oder Phenylazo ein- oder mehrfach substituiert sein kann,
$R^5$ für eine $C_1$-$C_{18}$-Alkylengruppe steht, die innerhalb der C-C-Kette durch ein Brückenglied aus der Reihe -O-, -$NR^6$-, -S-, Phenylen, -CO-, -$SO_2$- oder -$CR^7R^8$- oder eine chemisch sinnvolle Kombination davon ein- oder mehrfach unterbrochen sein kann und in dem die Reste $R^6$, $R^7$ und $R^8$ unabhängig voneinander jeweils ein Wasserstoffatom oder eine $C_1$-$C_4$-Alkylgruppe sind, die unsubstituiert oder durch einen heterocyclischen Rest,

vorzugsweise vom Imidazol- oder Piperazin-Typ, substituiert sein kann,
oder $R^5$ für eine Phenylengruppe steht, die unsubstituiert oder durch $C_1$-$C_4$-Alkyl oder $C_1$-$C_4$-Alkoxy ein- oder mehrfach substituiert sein kann,
$Y^-$ einen der anionischen Reste $-SO_3^-$ oder $-COO^-$ bedeutet, und
$X^+$ die Bedeutung $H^+$ oder das Äquivalent

$$\frac{M^{m+}}{m}$$

eines Metallkations aus der 1. bis 5. Hauptgruppe oder aus der 1. oder 2. oder der 4. bis 8. Nebengruppe des Periodensystems der chemischen Elemente hat, wobei m eine der Zahlen 1, 2 oder 3 ist,
oder ein Ammoniumion $N^+R^9R^{10}R^{11}R^{12}$ definiert, wobei die Substituenten $R^9$, $R^{10}$, $R^{11}$ und $R^{12}$ unabhängig voneinander jeweils ein Wasserstoffatom oder eine Gruppe aus der Reihe $C_1$-$C_{30}$-Alkyl, $C_2$-$C_{30}$-Alkenyl, $C_5$-$C_{30}$-Cycloalkyl, unsubstituiertes oder durch $C_1$-$C_8$-alkyliertes Phenyl oder eine (Poly)alkylenoxygruppe

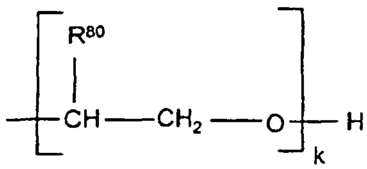

sind,
in der $R^{80}$ für Wasserstoff oder $C_1$-$C_4$-Alkyl steht und k eine Zahl von 1 bis 30 ist;
und worin als $R^9$, $R^{10}$, $R^{11}$ und $R^{12}$ ausgewiesenes Alkyl, Alkenyl, Cycloalkyl, Phenyl oder Alkylphenyl durch Amino, Hydroxy und/oder Carboxy substituiert sein können;
oder wobei die Substituenten $R^9$ und $R^{10}$ zusammen mit dem quartären N-Atom ein fünf- bis siebengliedriges gesättigtes Ringsystem, das ggf. noch weitere Heteroatome enthält, bilden können;
oder wobei die Substituenten $R^9$, $R^{10}$ und $R^{11}$ zusammen mit dem quartären N-Atom ein fünf- bis siebengliedriges aromatisches Ringsystem, das ggf. noch weitere Heteroatome enthält und an dem ggf. zusätzliche Ringe ankondensiert sind, bilden können;

und/oder Verbindungen mit der allgemeinen Formel (IV)

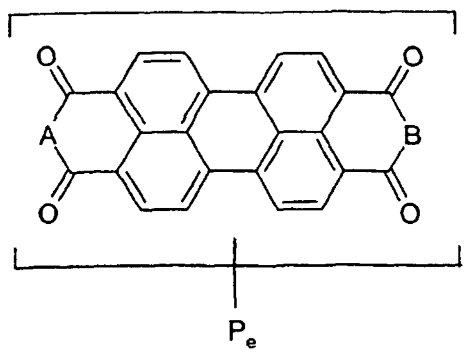

(IV)

eingesetzt werden, in welcher

A einen kationischen bivalenten Rest der Formel

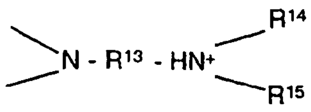

und

B einen anionischen bivalenten Rest der Formel

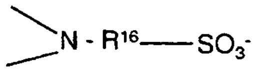 oder 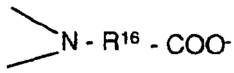

bedeutet,

e eine Zahl von 0 bis 8 ist, und wenn e > 0 ist,
P ein Chlor- oder Bromatom und, sofern e > 1 ist, ggf. eine Kombination davon darstellt,
$R^{13}$ für eine $C_1$-$C_{12}$-Alkylengruppe, eine ($C_6$-$C_{10}$-Aryl)-($C_1$-$C_6$)-alkylengruppe oder eine ($C_6$-$C_{10}$)-Arylengruppe steht,
$R^{14}$ und $R^{15}$ gleich oder verschieden sind und ein Wasserstoffatom, einen substituierten oder unsubstituierten $C_1$-$C_{20}$-Alkylrest oder einen substituierten oder unsubstituierten $C_2$-$C_{20}$-Alkenylrest bedeuten, oder
$R^{14}$ und $R^{15}$ zusammen mit dem angrenzenden N-Atom ein heterocyclisches Ringsystem bilden, das ggf noch weitere ringangehörige Heteroatome, N, O und/oder S enthält und an das ggf. zusätzliche Ringe ankondensiert sind, und
$R^{16}$ eine geradkettige oder verzweigte $C_1$-$C_{12}$-Alkylengruppe darstellt;

und/oder Verbindungen mit der allgemeinen Formel (V)

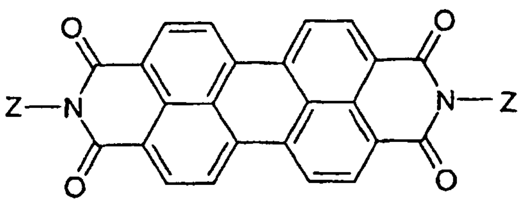

(V)

eingesetzt werden, in welcher die beiden Reste Z gleich oder verschieden sind und Z die Bedeutung $Z^1$, $Z^2$, $Z^3$ oder $Z^4$ hat, mit der Maßgabe, daß beide Reste Z nicht gleichzeitig $Z^4$ sind, wobei

$Z^1$ ein Rest der Formel (Va) ist,

$$-[X-Y]_q-[X^1-Y^1]_r-[X^2-NH]_sH \qquad (Va)$$

worin

X, $X^1$ und $X^2$ gleich oder verschieden sind und einen verzweigten oder unverzweigten $C_2$-$C_6$-Alkylenrest oder einen $C_5$-$C_7$-Cycloalkylenrest bedeuten, der durch 1 bis 4 $C_1$-$C_4$-Alkylreste, Hydroxyreste, Hydroxyalkylreste mit 1 bis 4 Kohlenstoffatomen und/oder durch 1 bis 2 weitere $C_5$-$C_7$-Cycloalkylreste substituiert sein kann;
Y und $Y^1$ gleich oder verschieden sind und eine NH-, -O-, N($C_1$-$C_6$-alkyl)-Gruppe, oder

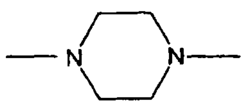

bedeuten;
q eine Zahl von 1 bis 6;
r und s unabhängig voneinander eine Zahl von 0 bis 6, wobei r und s nicht gleichzeitig Null sind;

und worin

$Z^2$ ein Rest der Formel (Vb) ist,

$$- [X - O]_{q1} - [X^1 - O]q\ H \qquad (Vb)$$

worin

q1 eine Zahl von 0 bis 6;

und worin

$Z^3$ ein Rest der Formel (Vc) ist,

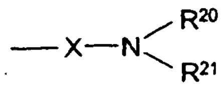

(Vc)

worin

$R^{20}$ und $R^{21}$ unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teil- oder perfluorierte Alkenylgruppe mit 2 bis 20 Kohlenstoffatomen darstellen, wobei die Substituenten Hydroxy, Phenyl, Cyano, Chlor, Brom, $C_2$-$C_4$-Acyl oder $C_1$-$C_4$-Alkoxy sein können, oder
$R^{20}$ und $R^{21}$ zusammen mit dem N-Atom einen gesättigten, ungesättigten oder aromatischen heterocyclischen Ring bilden, der gegebenenfalls ein weiteres Stickstoff-, Sauerstoff- oder Schwefelatom im Ring enthält; und
X die oben genannte Bedeutung hat;

und worin

$Z^4$ Wasserstoff, Hydroxy, Amino, Phenyl oder $C_1$-$C_{20}$-Alkyl ist, wobei der Phenylring und die Alkylgruppe durch ein oder mehrere Substituenten aus der Gruppe Cl, Br, CN, OH, $C_6H_5$, Carbamoyl, $C_2$-$C_4$-Acyl und $C_1$-$C_4$-Alkoxy substituiert sein können, der Phenylring auch durch
$NR^{20}R^{21}$ substituiert sein kann, wobei $R^{20}$ und $R^{21}$ die oben genannte Bedeutung haben, oder die Alkylgruppe perfluoriert oder teilfluoriert ist.

**13.** Verfahren nach Anspruch 10 oder 11, **dadurch gekennzeichnet, dass** man solche anionenaktive, kationenaktive oder nichtionogenen Tenside einsetzt, die bei der Destillation des Ammoniaks und bei der Naßmahlung nicht schäumen.

**14.** Verfahren nach einem oder mehreren der Ansprüche 10 bis 12, **dadurch gekennzeichnet, dass** man als Tenside Fettsäuretauride, Harzseifen, Ammoniumsalze von Fettaminen oder ein Kondensationsprodukt von Cyanurchlorid, Taurin, N',N-Diethylaminopropylamin und p-Phenylendiamin einsetzt.

## Claims

**1.** A process for preparing transparent perylimide pigments of the formula (I)

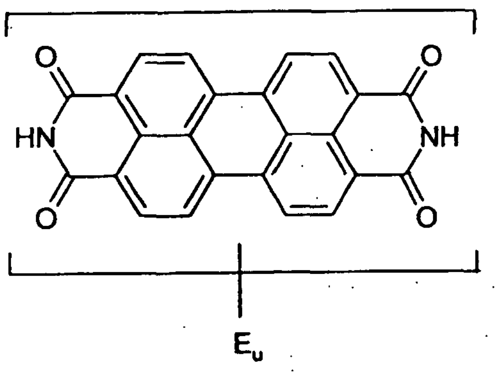

(I)

in which

u is a number from 0 to 8 and, if u > 0,
E is a chlorine or bromine atom and, where u > 1, may be a combination thereof, which comprises wet-grinding a crude perylimide pigment in a liquid medium in a stirred ballmill operated at a power density of from 1.0 kW per liter of milling space and at a stirrer tip speed of more than 12 m/s under the action of grinding media having a diameter of less than or equal to 0.9 mm, and isolating the resulting pigment, the liquid medium being water, $C_1$-$C_8$ alkanols, cyclic alkanols, $C_1$-$C_5$ dialkyl ketones or a mixture of these solvents with water.

**2.** The process as claimed in claim 1, wherein the crude perylimide pigment has been prepared by melting 1,8-naphthalenedicarboximide with an alkali metal hydroxide and oxidizing the leuco form, or by condensing perylene-3,4,9-10-tetracarboxylic acid (salt) or anhydride with ammonia.

**3.** The process as claimed in claim 1 or 2, wherein wet grinding is conducted in an aqueous alkaline or neutral pH range.

**4.** The process as claimed in one or more of claims 1 to 3, wherein the residence time of the millbase in the stirred ballmill is from 5 to 60 minutes, preferably from 10 to 45 minutes.

**5.** The process as claimed in one or more of claims 1 to 4, wherein perylene-3,4,9,10-tetracarboxylic acid (salt) or anhydride (peracid) is reacted with at least 2 times the molar amount of ammonia and an at least 3-fold amount by weight of water, based on the weight of the peracid, at a temperature of from 50 to 200°C and the resulting crude pigment is subjected to wet grinding as in claim 1.

**6.** The process as claimed in claim 5, wherein from 3 to 6 times the molar amount of ammonia per mole of peracid is used.

**7.** The process as claimed in claim 5 or 6, wherein from 5 to 15 times the amount by weight of water, based on the weight of the peracid, is used.

**8.** The process as claimed in one or more of claims 5 to 7, wherein excess ammonia is distilled off before wet grinding.

**9.** The process as claimed in one or more of claims 5 to 8, wherein the crude pigment suspension is passed on for wet grinding without being isolated.

**10.** The process as claimed in one or more of claims 1 to 9, wherein, before or during the crude pigment synthesis, before or during wet grinding, before or during the isolation or drying of the pigment, or to the dry pigment, or at two or more of the stated points in time, an auxiliary is added from the group consisting of surfactants, pigment dispersants, fillers, standardizers, resins, defoamers, antidust agents, extenders, shading colorants, preservatives, drying retardants, rheology control additives, or a combination thereof.

**11.** The process as claimed in claim 10, wherein the auxiliaries are added in a total amount of 0 to 40% by weight, preferably from 1 to 25% by weight, based on the weight of the crude pigment.

**12.** The process as claimed in claim 10 or 11, wherein pigment dispersants used comprise compounds of the formula (II)

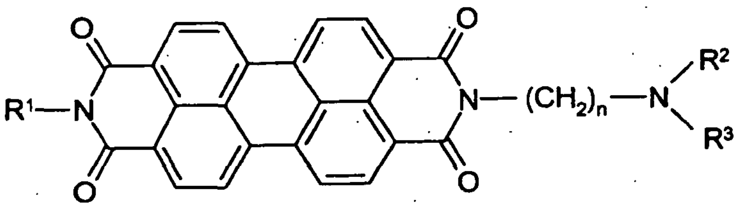

(II)

in which

$R^1$ is a hydrogen atom, a hydroxyl or amino group or a $C_1$-$C_8$-alkyl group which may be substituted by from 1 to 4 chlorine or bromine atoms or by a phenyl, cyano, hydroxyl, carbamoyl, $C_2$-$C_4$-acyl or $C_1$-$C_4$-alkoxy group or is perfluorinated or partly fluorinated;
$R^2$ and $R^3$ independently of one another are a hydrogen atom, a substituted or unsubstituted or partly fluorinated or perfluorinated alkyl group of 1 to 20 carbon atoms, or a substituted or unsubstituted or partly fluorinated or perfluorinated alkenyl group of 2 to 20 carbon atoms, it being possible for the substituents to be hydroxyl, phenyl, cyano, chlorine, bromine, $C_2$-$C_4$-acyl or $C_1$-$C_4$-alkoxy, or $R^2$ and $R^3$ together with the nitrogen atom form a saturated, unsaturated or aromatic heterocyclic ring which if desired contains a further nitrogen, oxygen or sulfur atom in the ring; and
n is a number from 1 to 6;

and/or compounds of the formula (III)

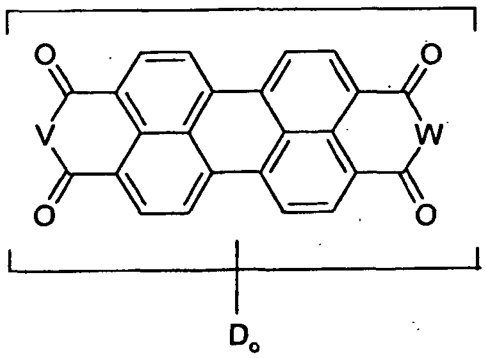

(III)

in which

V is a bivalent radical -O-, $>NR^4$ or $>NR^5$-$Y^-$ $X^+$,
W is the bivalent radical $>NR^5$-$Y^-$ $X^+$,
o is a number from 0 to 8 and, if o > 0,
D is a chlorine or bromine atom and, where o > 1, may be a combination thereof,
$R^4$ is a hydrogen atom or a $C_1$-$C_{18}$-alkyl group, especially $C_1$-$C_4$-alkyl, or is a phenyl group which may be unsubstituted or substituted one or more times by halogen, $C_1$-$C_4$-alkyl, $C_1$-$C_4$-alkoxy or phenylazo,
$R^5$ is a $C_1$-$C_{18}$-alkylene group which within the C-C chain may be interrupted one or more times by a bridging link from the series -O-, $-NR^6$-, -S-, phenylene, -CO-, $-SO_2$- or $-CR^7R^8$- or by a chemically rational combination thereof and in which the radicals $R^6$, $R^7$ and $R^8$ independently of one another are each a hydrogen atom or a $C_1$-$C_4$-alkyl group which may be unsubstituted or substituted by a heterocyclic radical, preferably the imidazole or piperazine type,
or $R^5$ is a phenylene group which may be unsubstituted or substituted one or more times by $C_1$-$C_4$-alkyl or $C_1$-$C_4$-alkoxy,
$Y^-$ is one of the anionic radicals $-SO_3^-$ or $-COO^-$, and
$X^+$ has the definition $H^+$ or the equivalent

$$\frac{M^{m+}}{m}$$

of a metal cation from main groups 1 to 5 or transition groups 1 or 2 or 4 to 8 of the Periodic Table of the Elements, m being one of the numbers 1, 2 or 3,
or defines an ammonium ion $N^+R^9R^{10}R^{11}R^{12}$, where the substituents $R^9$, $R^{10}$, $R^{11}$ and $R^{12}$ independently of one another are each a hydrogen atom or a group from the series $C_1$-$C_{30}$-alkyl, $C_2$-$C_{30}$-alkenyl, $C_5$-$C_{30}$-cycloalkyl, unsubstituted or $C_1$-$C_8$-alkylated phenyl, or a (poly)alkyleneoxy group

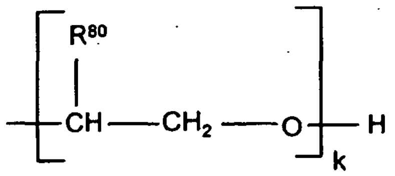

in which $R^{80}$ is hydrogen or $C_1$-$C_4$-alkyl and k is a number from 1 to 30;
and in which $R^9$, $R^{10}$, $R^{11}$ and $R^{12}$ as alkyl, alkenyl, cycloalkyl, phenyl or alkylphenyl may be substituted by amino, hydroxyl and/or carboxyl; or where the substituents $R^9$ and $R^{10}$ together with the quaternary nitrogen atom may form a five- to seven-membered saturated ring system which if desired contains further heteroatoms; or where the substituents $R^9$, $R^{10}$ and $R^{11}$ together with the quaternary nitrogen atom may form a five-to seven-membered aromatic ring system which if desired contains further heteroatoms and to which, if desired, additional rings are fused on;

and/or compounds of the formula (IV)

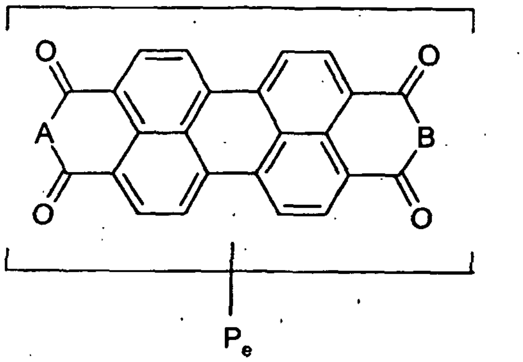

(IV)

in which

A is a cationic bivalent radical of the formula

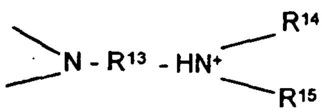

and

B is an anionic bivalent radical of the formula

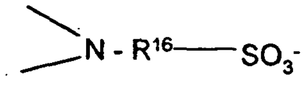 or 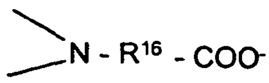

e is a number from 0 to 8 and, if e > 0,
P is a chlorine or bromine atom and, where e > 1, may be a combination thereof,
$R^{13}$ is a $C_1$-$C_{12}$-alkylene group, a ($C_6$-$C_{10}$)-aryl($C_1$-$C_6$)-alkylene group or a ($C_6$-$C_{10}$)-arylene group,
$R^{14}$ and $R^{15}$ are identical or different and are a hydrogen atom, a substituted or unsubstituted $C_1$-$C_{20}$-alkyl radical or a substituted or unsubstituted $C_2$-$C_{20}$-alkenyl radical, or
$R^{14}$ and $R^{15}$ together with the adjacent nitrogen atom form a heterocyclic ring system which if desired contains further heteroatom ring members N, O and/or S and to which, if desired, additional rings are fused on, and
$R^{16}$ is a straight-chain or branched $C_1$-$C_{12}$-alkylene group;

and/or compounds of the formula (V)

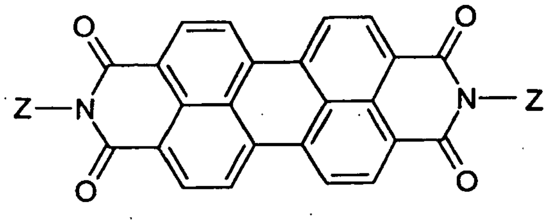 (V)

in which the two radicals Z are identical or different and Z has the definition $Z^1$, $Z^2$, $Z^3$ or $Z^4$, with the proviso that both radicals Z are not simultaneously $Z^4$, where

$Z^1$ is a radical of the formula (Va)

$$- [X- Y]_q- [X^1- Y^1]_r-[X^2 -NH]_sH \qquad (Va)$$

in which

X, $X^1$ and $X^2$ are identical or different and are a branched or unbranched $C_2$-$C_6$-alkylene radical or a $C_5$-$C_7$-cycloalkylene radical which may be substituted by from 1 to 4 $C_1$-$C_4$-alkyl radicals, hydroxyl radicals, hydroxyalkyl radicals of 1 to 4 carbon atoms, and/or by 1 or 2 further $C_5$-$C_7$-cycloalkyl radicals;
Y and $Y^1$ are identical or different and are an NH-, -O-, N($C_1$-$C_6$-alkyl) group, or

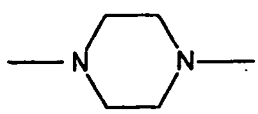

q is a number from 1 to 6;
r and s independently of one another are a number from 0 to 6, r and s not simultaneously being zero; and in which
$Z^2$ is a radical of the formula (Vb)

$$- [X - O]_{q1} - [X^1 - O]_q H \qquad (Vb)$$

in which

q1 is a number from 0 to 6;

and in which

$Z^3$ is a radical of the formula (Vc)

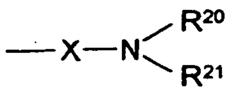

(Vc)

in which

$R^{20}$ and $R^{21}$ independently of one another are a hydrogen atom, a substituted or unsubstituted or partly fluorinated or perfluorinated alkyl group of 1 to 20 carbon atoms, or a substituted or unsubstituted or partly fluorinated or perfluorinated alkenyl group of 2 to 20 carbon atoms, it being possible for the substituents to be hydroxyl, phenyl, cyano, chlorine, bromine, $C_2$-$C_4$-acyl or $C_1$-$C_4$-alkoxy, or
$R^{20}$ and $R^{21}$ together with the nitrogen atom form a saturated, unsaturated or aromatic heterocyclic ring which if desired contains a further nitrogen, oxygen or sulfur atom in the ring; and
X is as defined above;

and in which

$Z^4$ is hydrogen, hydroxyl, amino, phenyl or $C_1$-$C_{20}$-alkyl, it being possible for the phenyl ring and the alkyl group to be substituted by one or more substituents from the group consisting of Cl, Br, CN, OH, $C_6H_5$, carbamoyl, $C_2$-$C_4$-acyl and $C_1$-$C_4$-alkoxy, and the phenyl ring may also be substituted by $NR^{20}R^{21}$, $R^{20}$ and $R^{21}$ being as defined above, or the alkyl group is perfluorinated or partly fluorinated.

**13.** The process as claimed in claim 10 or 11, wherein anionic, cationic or nonionic surfactants which do not foam during the distillation of the ammonia and during the wet grinding are added.

**14.** The process as claimed in one or more of claims 10 to 12, wherein surfactants used comprise fatty acid taurides, resin soaps, ammonium salts of fatty amines, or a condensation product of cyanuric chloride, taurine, N',N-diethylaminopropylamine and p-phenylenediamine.

## Revendications

**1.** Procédé de préparation de pigments transparents de pérylimide de formule (I)

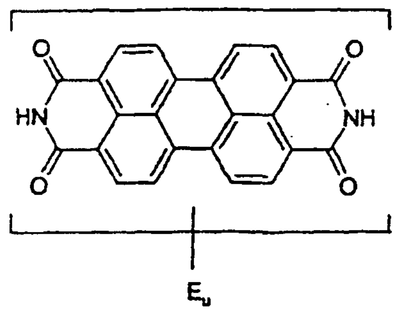

(I)

dans laquelle
u est un nombre de 0 à 8 et, quand u > 0,
E est un atome de chlore ou de brome et, si u > 1, représente éventuellement une combinaison de ceux-ci, **caractérisé en ce qu'**on soumet à un broyage humide un pigment brut de pérylimide dans un milieu liquide, sur un broyeur à micro-élément, qui est exploité avec une densité de puissance supérieure à 1,0 kW par litre d'espace de broyage, et une vitesse périphérique de l'agitateur supérieure à 12 m/s, sous l'action d'éléments broyeurs ayant un diamètre supérieur ou égal à 0,9 mm, et on isole le pigment ainsi obtenu, le milieu liquide étant l'eau, les alcanols en $C_1$-$C_8$, les alcanols cycliques, les dialkylcétones en $C_1$-$C_5$, ou un mélange de ces solvants avec de l'eau.

**2.** Procédé selon la revendication 1, **caractérisé en ce que** le pigment brut de pérylimide a été préparé par fusion de l'imide de l'acide 1,8-naphtalènedicarboxylïque avec un hydroxyde d'un métal alcalin, et oxydation de la formule

leucodérivée, ou encore par condensation d'acide pérylène-3,4,9-10-tétracarboxylique ou d'un sel de ce dernier, ou d'anhydride pérylène-3,4,9-10-tétracarboxylique, avec de l'ammoniac.

3. Procédé selon la revendication 1 ou 2, **caractérisé en ce que** le broyage humide est mis en oeuvre sur une plage de pH aqueuse, alcaline ou neutre.

4. Procédé selon l'une ou plusieurs des revendications 1 à 3, **caractérisé en ce que** la durée de séjour de l'élément broyeur dans le broyeur à micro-élément est de 5 à 60 minutes et de préférence de 10 à 45 minutes.

5. Procédé selon l'une ou plusieurs des revendications 1 à 4, **caractérisé en ce qu'**on fait réagir à une température de 50 à 200°C de l'acide pérylène-3,4,9,10-tétracarboxylique ou un sel de ce dernier ou de l'anhydride pérylène-3,4,9,10-tétracarboxylique (peracide) avec une quantité au moins deux fois molaire d'ammoniac et une quantité pondéral au moins triple d'eau, rapportées au poids du peracide, et on soumet à un broyage humide selon la revendication 1 le pigment brut ainsi obtenu.

6. Procédé selon la revendication 5, **caractérisé en ce qu'**on utilise par mole de peracide une quantité 3 à 6 fois molaire d'ammoniac.

7. Procédé selon la revendication 5 ou 6, **caractérisé en ce qu'**on utilise, rapportée au poids du peracide, une quantité 5 à 15 fois plus importante d'eau.

8. Procédé selon l'une ou plusieurs des revendications 5 à 7, **caractérisé en ce que**, avant le broyage humide, on chasse par distillation l'ammoniac en excès.

9. Procédé selon l'une ou plusieurs des revendications 5 à 8, **caractérisé en ce que** la suspension de pigment brut est envoyée au broyage humide sans isolement intermédiaire.

10. Procédé selon l'une ou plusieurs des revendications 1 à 9, **caractérisé en ce que**, avant ou pendant la synthèse du pigment brut, avant ou pendant le broyage humide, avant ou pendant l'isolement ou le séchage du pigment, ou au pigment sec, ou en plusieurs des instants mentionnés, on ajoute un adjuvant choisi dans l'ensemble comprenant les tensioactifs, les dispersants pour pigments, les matières de charge, les agents thixotropiques, les résines, les antimousses, les agents anti-poussière, les charges, les colorants pour nuançage, les conservateurs, les retardateurs de séchage, les additifs régulateurs de rhéologie, ou une combinaison de ces derniers.

11. Procédé selon la revendication 10, **caractérisé en ce que** les adjuvants sont ajoutés en une quantité totale de 0 à 40 % en poids et de préférence de 1 à 25 % en poids par rapport au poids du pigment brut.

12. Procédé selon la revendication 10 ou 11, **caractérisé en ce qu'**on utilise en tant que dispersants pour pigments des composés de formule (II)

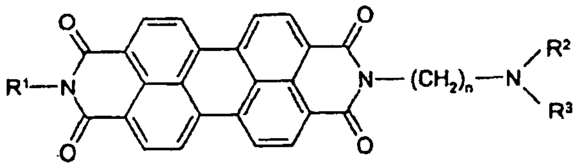

(II)

dans laquelle
$R^1$ est un atome d'hydrogène, un groupe hydroxy ou amino ou un groupe alkyle en $C_1$-$C_8$, qui peut être substitué par 1 à 4 atomes de chlore ou de brome, par un groupe phényle, cyano, hydroxy, carbamoyle, acyle en $C_2$-$C_4$ ou alcoxy en $C_1$-$C_4$, ou encore est perfluoré ou partiellement fluoré ;
$R^2$ et $R^3$ représentent chacun indépendamment de l'autre un atome d'hydrogène, un groupe alkyle ayant 1 à 20 atomes de carbone, substitué ou non substitué, ou partiellement fluoré ou perfluoré, ou un groupe alcényle ayant 2 à 20 atomes de carbone, substitué ou non substitué, ou partiellement fluoré ou perfluoré, les substituants pouvant être les groupes hydroxy, phényle, cyano, chloro, bromo, acyle en $C_2$-$C_4$ ou alcoxy en $C_1$-$C_4$, ou encore $R^2$ et $R^3$, avec l'atome d'azote, forment un noyau hétérocyclique saturé, insaturé ou aromatique, qui éventuellement contient dans le noyau un atome supplémentaire d'azote, d'oxygène ou de soufre ; et
n est un nombre de 1 à 6 ;

et/ou on utilise des composés de formule générale (III)

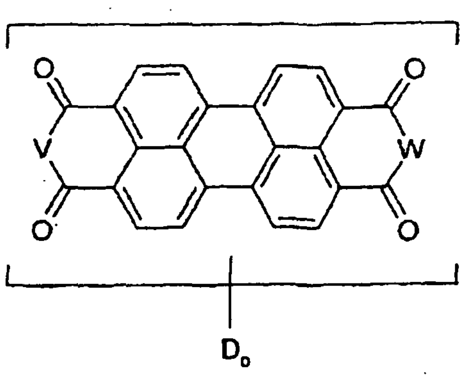

(III)

dans laquelle
V est un radical bivalent -O-, >$NR^4$ ou >$NR^5$-$Y^-X^+$,
W est le radical bivalent >$NR^5$-$Y^-X^+$,
o est un nombre de 0 à 8 et, quand o > 0,
D est un atome de chlore ou de brome et, si o > 1, représente éventuellement une combinaison de ceux-ci,
$R^4$ est un atome d'hydrogène ou un groupe alkyle en $C_1$-$C_{18}$, en particulier alkyle en $C_1$-$C_4$, ou un groupe phényle, qui peut être non substitué ou être une ou plusieurs fois substitué par des substituants halogéno, alkyle en $C_1$-$C_4$, alcoxy en $C_1$-$C_4$ ou phénylazo,
$R^5$ est un groupe alkylène en $C_1$-$C_{18}$, qui à l'intérieur de la chaîne C-C peut être une ou plusieurs fois interrompu par un chaînon pontant de la série -O-, -$NR^6$-, -S-, phénylène, -CO-, -$SO_2$- ou -$CR^7R^8$- ou une combinaison chimiquement raisonnable de ces derniers, et où les radicaux $R^6$, $R^7$ et $R^8$ représentent chacun indépendamment des autres un atome d'hydrogène ou un groupe alkyle en $C_1$-$C_4$, qui peut être non substitué ou être substitué par un résidu hétérocyclique, de préférence du type imidazole ou pipérazine,
ou bien $R^5$ représente un groupe phénylène, qui peut être non substitué ou être une ou plusieurs fois substitué par des substituants alkyle en $C_1$-$C_4$ ou alcoxy en $C_1$-$C_4$,
$Y^-$ est l'un des résidus anioniques -$SO_3^-$ ou -$COO^-$, et
$X^+$ représente $H^+$, ou l'équivalent $M^{m+}/m$ d'un cation métallique du 1er au 5ème groupe principal ou du 1er ou du 2ème ou du 4ème au 8ème groupe secondaire du Tableau Périodique des Eléments chimiques, m étant l'un des nombres 1, 2 ou 3,
ou un ion ammonium $N^+$ $R^9$, $R^{10}$, $R^{11}$, $R^{12}$, les substituants $R^9$, $R^{10}$, $R^{11}$ et $R^{12}$ représentant chacun indépendamment des autres un atome d'hydrogène ou un groupe de la série alkyle en $C_1$-$C_{30}$, alcényle en $C_2$-$C_{30}$, cycloalkyle en $C_5$-$C_{30}$, phényle non substitué ou alkylé en $C_1$-$C_8$, ou un groupe poly(alkylènoxy)

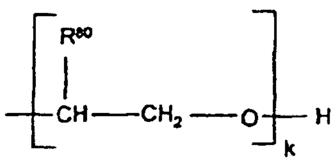

où $R^{80}$ est un atome d'hydrogène ou un groupe alkyle en $C_1$-$C_4$ et k est un nombre de 1 à 30 ;
et où les groupes alkyle, alcényle, cycloalkyle, phényle ou alkylphényle représentant $R^9$, $R^{10}$, $R^{11}$ et $R^{12}$ peuvent être substitués par des substituants amino, hydroxy et/ou carboxy,
ou encore les substituants $R^9$ et $R^{10}$, avec l'atome d'azote quaternaire, peuvent former un système cyclique saturé à cinq à sept chaînons, qui éventuellement contient encore d'autres hétéroatomes ;
ou encore les substituants $R^9$, $R^{10}$ et $R^{11}$ peuvent, avec l'atome d'azote quaternaire, former un système cyclique aromatique à cinq à sept chaînons, qui éventuellement contient encore d'autres hétéroatomes et auquel sont condensés éventuellement des noyaux supplémentaires ;
et/ou on utilise des composés ayant la formule générale (IV)

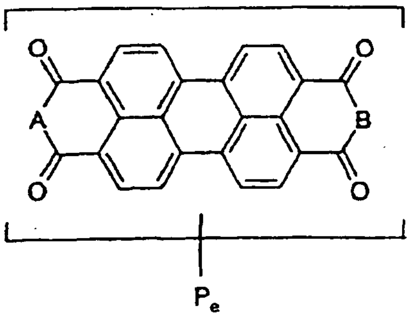

(IV)

dans laquelle
A est un résidu bivalent cationique de formule

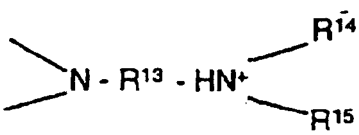

et
B est un résidu bivalent anionique de formule

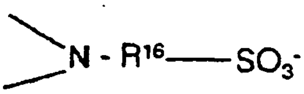 ou 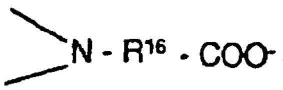

e est un nombre de 0 à 8 et, quant e > 0,
P est un atome de chlore ou de brome et, si e > 1, représente éventuellement une combinaison de ceux-ci,
$R^{13}$ est un groupe alkylène en $C_1$-$C_{12}$, un groupe (aryle en $C_6$-$C_{10}$)-(alkylène en $C_1$-$C_6$) ou un groupe arylène en $C_6$-$C_{10}$,
$R^{14}$ et $R^{15}$ sont identiques ou différents et représentent chacun un atome d'hydrogène, un radical alkyle en $C_1$-$C_{20}$ substitué ou non substitué, ou un radical alcényle en $C_2$-$C_{20}$ substitué ou non substitué, ou bien
$R^{14}$ et $R^{15}$, avec l'atome d'azote voisin, forment un système cyclique hétérocyclique, qui éventuellement contient encore d'autres hétéroatomes nucléaires N, O et/ou S, et auquel sont condensés éventuellement des noyaux supplémentaires, et
$R^{16}$ est un groupe alkylène en $C_1$-$C_{12}$ à chaîne droite ou ramifiée ;
et/ou on utilise des composés de formule générale (V)

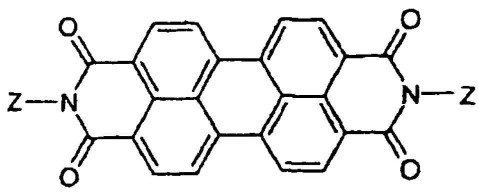

(V)

dans laquelle les deux radicaux Z sont identiques ou différents, et Z représente $Z^1$, $Z^2$ $Z^3$ ou $Z^4$, à la condition que les deux radicaux Z ne soient pas simultanément $Z^4$, où
$Z^1$ est un radical de formule (Va),

$$- [X- Y]_q- [X^1- Y^1]_r-[X^2-NH]_sH \qquad (Va)$$

où
X, $X^1$ et $X^2$ sont identiques ou différents et représentent chacun un radical alkylène en $C_2$-$C_6$ à chaîne droite ou

ramifiée ou un radical cycloalkylène en $C_5$-$C_7$, qui peut être substitué par 1 à 4 radical alkyle en $C_1$-$C_4$, radicaux hydroxy, radicaux hydroxyalkyle ayant 1 à 4 atomes de carbone et/ou par un à deux autres radicaux cycloalkyle en $C_5$-$C_7$,
Y et $Y^1$ sont identiques ou différents et représentent chacun NH-, -O-, un groupe N(alkyle en $C_1$-$C_6$) ou

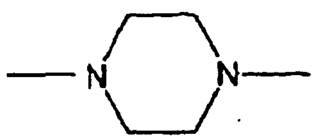

q est un nombre de 1 à 6 ;
r et s sont chacun indépendamment de l'autre un nombre de 0 à 6, r et s n'étant pas simultanément nuls ;
et où
$Z^2$ est un radical de formule (Vb)

$$-[X-O]_{q1}-[X^1-O]_q\ H \qquad (Vb)$$

dans laquelle
q1 est un nombre de 0 à 6 ;
et où
$Z^3$ est un radical de formule (Vc)

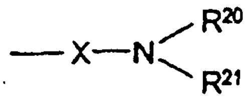

(Vc)

dans laquelle
$R^{20}$ et $R^{21}$ représentent chacun indépendamment de l'autre un atome d'hydrogène, un groupe alkyle ayant 1 à 20 atomes de carbone, substitué ou non substitué, ou partiellement fluoré ou perfluoré, ou un groupe alcényle ayant 2 à 20 atomes de carbone, substitué ou non substitué, ou partiellement fluoré ou perfluoré, les substituants pouvant être des groupes hydroxy, phényle, cyano, chloro, bromo, acyle en $C_2$-$C_4$ ou alcoxy en $C_1$-$C_4$, ou bien
$R^{20}$ et $R^{21}$, avec l'atome d'azote, forment un noyau hétérocyclique saturé, insaturé ou aromatique, qui éventuellement contient sur le noyau un atome supplémentaire d'azote, d'oxygène ou de soufre ; et
X a les significations données ci-dessus ;
et où
$Z^4$ est un atome d'hydrogène ou un groupe hydroxy, amino, phényle ou alkyle en $C_1$-$C_{20}$, le noyau phényle et le groupe alkyle pouvant être substitués par un ou plusieurs substituants choisis dans l'ensemble comprenant Cl, Br, CN, OH, $C_6H_5$, les groupes carbamoyle, acyle en $C_2$-$C_4$ et alcoxy en $C_1$-$C_4$, le noyau phényle peut aussi être substitué par $NR^{20}R^{21}$, $R^{20}$ et $R^{21}$ ayant les significations ci-dessus, ou encore le groupe alkyle est perfluoré ou partiellement fluoré.

**13.** Procédé selon la revendication 10 ou 11, **caractérisé en ce qu'**on utilise des tensioactifs anioniques, cationiques ou non ioniques qui ne vont pas mousser lors de la distillation de l'ammoniac et lors du broyage humide.

**14.** Procédé selon l'une ou plusieurs des revendications 10 à 12, **caractérisé en ce qu'**on utilise en tant que tensioactifs des taurides d'acides gras, des savons de résine, des sels d'ammonium d'amines grasses ou un produit de condensation du chlorure de cyanuryle, de la taurine, de la N',N-diéthylaminopropylamine et de la p-phénylènediamine.